# EUROPEAN PATENT APPLICATION

(11) **EP 4 757 413 A1**
(43) Date of publication of application: **10.06.2026**
(21) Application number: 23947623.7
(22) Date of filing: 02.08.2023
(51) Int. Cl.: H04W 36/04, H04W 72/231

(54) **TERMINAL DEVICE, BASE STATION DEVICE, AND WIRELESS COMMUNICATION SYSTEM**

(71) Applicant: 1FINITY INC., Kawasaki-shi, Kanagawa 211-8588 (JP)
(72) Inventor: HORI, Takako, Kawasaki-shi, Kanagawa 211-8588 (JP); UEMURA, Katsunari, Kawasaki-shi, Kanagawa 211-8588 (JP)
(74) Representative: Haseltine Lake Kempner LLP
(86) International application number: PCT/JP2023/028280
(87) International publication number: WO 2025/027826

(57) **Abstract**

A terminal device includes, a receiver configured to be able to receive an RRC message and a first signal from a base station device and a processor configured to be able to perform configuration according to a first parameter in a case where the RRC message includes the first parameter, wherein the first parameter includes a second parameter indicating a group identifier of a current serving cell and a third parameter related to a configuration of a first LTM candidate and a group identifier of a cell of the first LTM candidate, the processor stores a second value of the second parameter in a first variable regardless of whether a first value is stored in the first variable in a case where the second parameter is included in the RRC message.

## Description

### TECHNICAL FIELD

The present invention relates to a terminal device, a base station device, and a wireless communication system.

### BACKGROUND ART

The current network of wireless communication using a mobile terminal (a smartphone or a feature phone) or the like is expanding. In the expansion of wireless communication, further increases in speed and capacity are being demanded.

In the 3rd Generation Partnership Project (3GPP (registered trademark)), which is an international standardization project, technical study and standard formulation of a cellular mobile communication system are performed. For example, Evolved Universal Terrestrial Radio Access (E-UTRA) is standardized as a Radio Access Technology (RAT) for 3.9th Generation (3.9G) and 4th Generation (4G), and Evolved Packet Core (EPC) is standardized as a core network (CN) technology. In addition, New Radio (NR) is standardized as a 5th Generation (5G) RAT, and 5G Core (5GC) is standardized as a core network technology. Further, at present, these extension technologies are continuously studied and standardized.

Technologies related to the NR or 5G system are described in, for example, the following Non-Patent Literature 1 to 12.

### CITATION LIST

### NON-PATENT LITERATURE

Non-Patent Literature 1: TS38.300 V17.5.0 Overview Specifications
Non-Patent Literature 2: TS38.211 V17.5.0 PHY channel and modulation specifications
Non-Patent Literature 3: TS38.321 V17.5.0 MAC specifications
Non-Patent Literature 4: TS38.322 V17.3.0 RLC specifications
Non-Patent Literature 5: TS38.323 V17.5.0 PDCP specifications
Non-Patent Literature 6: TS37.324 V17.0.0 SDAP specifications
Non-Patent Literature 7: TS38.304 V17.5.0 Idle mode and inactive mode specifications
Non-Patent Literature 8: TS38.331 V17.5.0 RRC specifications
Non-Patent Literature 9: RP-223520
Non-Patent Literature 10: R2-2211642
Non-Patent Literature 11: R2-2211795
Non-Patent Literature 12: TS33.501 V17.10.0 5G System security specifications

### SUMMARY OF INVENTION

### PROBLEMS TO BE SOLVED BY THE INVENTION

As one of the extension technologies, technical studies have been conducted on mobility improvement. One of study items is a technology called L1/L2-triggered mobility (LTM), which aims to reduce latency in mobility by changing a serving cell of a terminal device using Layer 1 and/or Layer 2 signals (Non-Patent Literature 9).

However, specific methods of the LTM have not been determined as standardized specifications. For example, details of a recovery method of RRC connection in consideration of security measures and the like in processing of a terminal device when the cell switching by the LTM fails are not determined. In addition, for example, specifications in a case where the conventional handover (synchronous reconfiguration) is performed in a state where LTM setting is performed on a terminal device are not determined in detail. Furthermore, for example, no discussion has been made on the LTM across Centralized Units (CUs).

Therefore, one disclosure is to provide a base station device, a terminal device, and a wireless communication system that enable flexible serving cell change.

### MEANS FOR SOLVING THE PROBLEMS

One disclosure is a terminal device including: a receiver configured to receive an RRC message and a first signal from a base station device; and a processor configured to be able to perform configuration according to a first parameter in a case where the RRC message includes the first parameter, wherein the first parameter includes a second parameter, the first parameter further includes a configuration of a first LTM candidate and a third parameter related to the first LTM candidate, and the processor performs cell switching to the first LTM candidate in a case where the first signal is received from the base station device, does not perform first processing in a case where a value of the third parameter is the same as a value of the second parameter, and performs the first processing in a case where the value of the third parameter is different from the value of the second parameter to replace the value of the second parameter with the value of the third parameter.

Furthermore, one disclosure is a base station device including: a transmitter configured to transmit an RRC message and a first signal to the terminal device; and a processor configured to include a first parameter in the RRC message and to be able to perform control to cause the terminal device to perform configuration according to a first parameter, wherein the first parameter includes a second parameter, the first parameter further includes a configuration of a first LTM candidate and a third parameter related to the first LTM candidate, and the processor transmits the first signal from the transmitter to the terminal device, causes the terminal device to perform cell switching to the first LTM candidate, causes first processing not to be performed in a case where a value of the third parameter is the same as a value of the second parameter, and causes the first processing to be performed in a case where the value of the third parameter is different from the value of the second parameter to replace the value of the second parameter with the value of the third parameter.

Furthermore, one disclosure is a wireless communication system including: a base station device configured to transmit an RRC message and a first signal; and a terminal device configured to receive the RRC message and the first signal and to perform configuration according to a first parameter in a case where the RRC message includes the first parameter, wherein the first parameter includes a second parameter, the first parameter further includes a configuration of a first LTM candidate and a third parameter related to the first LTM candidate, and the terminal device performs cell switching to the first LTM candidate in a case where the first signal is received from the base station device, does not perform first processing in a case where a value of the third parameter is the same as a value of the second parameter, and performs the first processing in a case where the value of the third parameter is different from the value of the second parameter to replace the value of the second parameter with the value of the third parameter.

### ADVANTAGEOUS EFFECTS OF THE INVENTION

One disclosure enables flexible serving cell change.

### BRIEF DESCRIPTION OF DRAWINGS

FIG. 1 is a figure illustrating a configuration example of a communication system.
FIG. 2 is a figure illustrating a configuration example of the base station device.
FIG. 3 is a figure illustrating a configuration example of the terminal device.
FIG. 4 is a figure illustrating an example of a protocol stack of the U-Plane.
FIG. 5 is a figure illustrating an example of a protocol stack of the C-Plane.
FIG. 6 is a figure illustrating an example of a message format of RRCReconfiguration.
FIG. 7 is a figure illustrating an example of a configuration of a cell group of the communication system.
FIG. 8 is a figure illustrating an example of a reconfiguration-with-synchronization.
FIGs. 9A and 9B are figures illustrating an example of a handover procedure by four-step random access.
FIG. 10 is a figure illustrating an example of a sequence of LTM.
FIG. 11 is a figure illustrating an example of a sequence of cell switching failure detection and cell switching failure processing.
FIG. 12 is a figure illustrating an example of a first cell switching failure processing method.
FIG. 13 is a figure illustrating an example of a second cell switching failure processing method.
FIG. 14 is a figure illustrating an example of a third cell switching failure processing method.
FIG. 15 is a figure illustrating an example of a fourth cell switching failure processing method.
FIG. 16 is a figure illustrating an example of processing according to the selected cell.
FIG. 17 is a figure illustrating an example of parameters related to the LTM included in the RRCReconfiguration message.
FIG. 18 is a figure illustrating a first example of handover processing during LTM configuration.
FIG. 19 is a figure illustrating a second example of handover processing during LTM configuration.
FIG. 20 is a figure illustrating a third example of handover processing during LTM configuration.

### DESCRIPTION OF EMBODIMENTS

Hereinafter, the present embodiment will be described in detail with reference to the drawings. Problems and examples in the present specification are merely exemplary and do not limit the claims of the present application. In particular, the technology of the present application can be applied to even different expressions as long as the expressions are technically equivalent even if the expressions are different, and the scope of rights is not limited.

In addition, in the present embodiment, names, processing, and the like of devices, nodes, functions, protocols, entities, signaling, messages, parameters, and the like in a case where the radio access technology is E-UTRA or NR and a case where the core network is EPC or 5GC will be described, but the embodiment may be used for other radio access technologies. The names of each node and entity in the embodiments may be different names.

### <Configuration Example of Communication System 10>

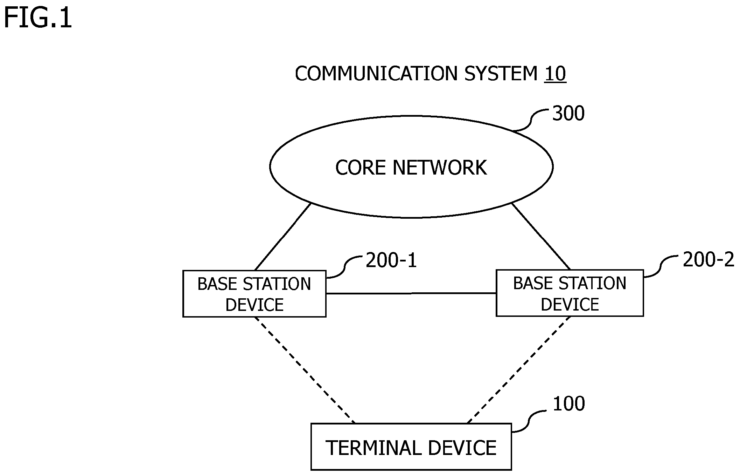

FIG. 1 is a figure illustrating a configuration example of a communication system 10. The communication system 10 includes a terminal device 100, base station devices 200-1 and 200-2, and a core network 300. The communication system 10 may be a figure of a wireless communication system in which the terminal device 100 communicates with the base station device 200-1 or the base station device 200-2, or may be a wireless communication system in which the terminal device 100 communicates with the base station device 200-1 and the base station device 200-2 through Multi Radio Dual Connectivity (MR-DC) which will be described later. In a case where communication is performed through MR-DC, for example, the base station device 200-1 is a master base station device, and the base station device 200-2 is a secondary base station device. Hereinafter, the master base station device may be referred to as a master node (MN), and the secondary base station device may be referred to as a secondary node (SN).

The terminal device 100 is wirelessly connected to one or both of the base station device 200-1 and the base station device 200-2, and performs wireless communication. The RAT that provides wireless connection is, for example, E-UTRA or NR. The terminal device 100 is a terminal device compatible with one or both of E-UTRA and NR.

The base station devices 200-1 and 200-2 (hereinafter, the base station devices may be referred to as a base station device 200) are communication devices that are wirelessly connected to the terminal device 100 and perform wireless communication. Furthermore, the base station devices 200-1 and 200-2 are connected to each other by wire, for example, and perform communication. The base station device 200 is connected to the core network 300 by wire, for example, and performs communication. The base station device 200 is, for example, a base station device of either an eNodeB (eNB) that provides E-UTRA as RAT or a gNodeB (gNB) that provides NR as RAT.

The core network 300 is a network corresponding to a certain generation. The core network 300 is, for example, 5GC which is a core network standardized for 5G or EPC which is a core network standardized for 4G.

Details of the MR-DC realized in the communication system 10 will be described later.

### <Configuration Example of Base Station Device 200>

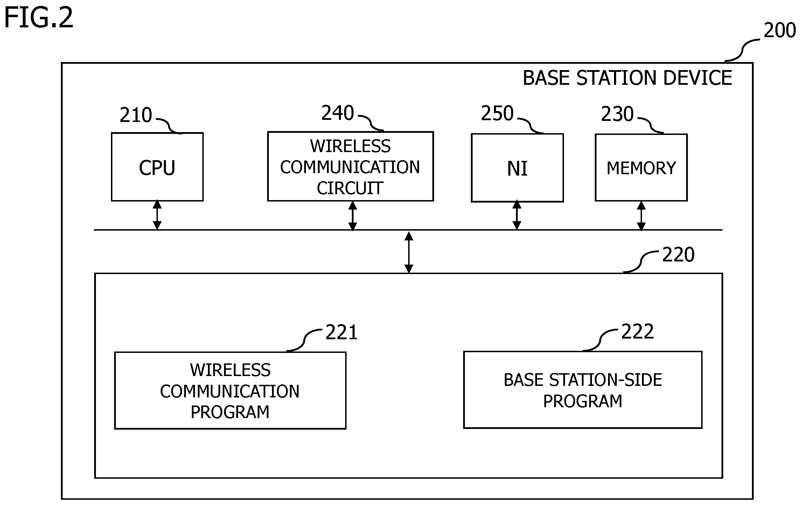

FIG. 2 is a figure illustrating a configuration example of the base station device 200. The base station device 200 is a communication device or a relay device including a central processing unit (CPU) 210, a storage 220, a memory 230, a wireless communication circuit 240, and a network interface 250.

The storage 220 is an auxiliary storage device such as a flash memory, a hard disk drive (HDD), or a solid state drive (SSD) that stores programs and data. The storage 220 stores a wireless communication program 221 and a base station-side program 222.

The memory 230 is an area where a program stored in the storage 220 is loaded. The memory 230 may also be used as an area where a program stores data.

The wireless communication circuit 240 is a circuit that is wirelessly connected to the terminal device 100 and performs communication. The base station device 200 receives a signal transmitted from the terminal device 100 via the wireless communication circuit 240, for example, and transmits a signal to the terminal device 100.

The network interface (NI) 250 is, for example, a communication device that is connected to another base station device 200 and realizes communication between base stations. In addition, the NI 250 is, for example, a communication device that is connected to the core network 300 (a communication device constituting the core network 300) and performs communication. The NI 250 is, for example, a network interface card (NIC). The base station device 200 receives a signal from another communication device via the NI250 and transmits a signal to the other communication device.

The CPU 210 is a processor that loads a program stored in the storage 220 into the memory 230, executes the loaded program, constructs each unit, and realizes each processing.

The CPU 210 executes the wireless communication program 221 to perform wireless communication processing. The wireless communication processing is processing of wirelessly connecting to the terminal device 100, wirelessly communicating with the terminal device 100, and relaying communication performed by the terminal device 100 with another communication device.

The CPU 210 executes the base station-side program 222 to construct a second transmission unit, a second reception unit, and a second processing unit, and performs base station-side processing. In a case where the base station device 200 performs communication with the terminal device 100 by using the MR-DC, the base station-side processing may include MR-DC master node processing and MR-DC secondary node processing. In this case, the MR-DC master node processing is processing of performing control on the master node side in the MR-DC, and the MR-DC secondary node processing is processing of performing control on the secondary node side in the MR-DC. The base station device 200 performs communication corresponding to each type of MR-DC which will be described later in the MR-DC master node processing and the MR-DC secondary node processing.

### <Configuration Example of terminal device 100>

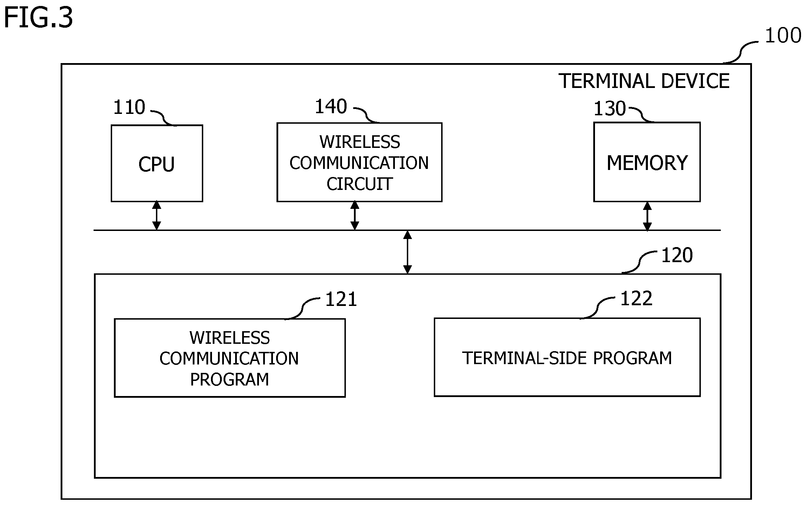

FIG. 3 is a figure illustrating a configuration example of the terminal device 100. The terminal device 100 is a communication device including a CPU 110, a storage 120, a memory 130, and a wireless communication circuit 140.

The storage 120 is an auxiliary storage device such as a flash memory, an HDD, or an SSD that stores programs and data. The storage 120 stores a terminal-side wireless communication program 121 and a terminal-side program 122.

The memory 130 is an area where a program stored in the storage 120 is loaded. In addition, the memory 130 may also be used as an area where a program stores data.

The wireless communication circuit 140 is a circuit that is wirelessly connected to the base station device 200 and performs communication. The terminal device 100 receives a signal transmitted from the base station device 200 via the wireless communication circuit 140, for example, and transmits a signal to the base station device 200. The wireless communication circuit 140 is, for example, a network card that supports wireless connection.

The CPU110 is a processor that loads a program stored in the storage 120 into the memory 130, executes the loaded program, constructs each unit, and realizes each processing.

The CPU110 executes the wireless communication program 121 to perform terminal-side wireless communication processing. The terminal-side wireless communication processing is processing of wirelessly connecting to the base station device 200 and performing wireless communication with the base station device 200 or communication with another communication device via the base station device 200.

The CPU 110 executes the terminal-side program 122 to construct a transmission unit, a reception unit, and a processing unit and perform terminal-side processing. In a case where the terminal device 100 performs communication with the base station device 200 by using the MR-DC, the terminal-side processing may include terminal-side MR-DC processing. In this case, the terminal-side MR-DC processing is processing of controlling communication in the MR-DC. In the terminal-side MR-DC processing, the terminal device 100 performs communication corresponding to each type of MR-DC which will be described later.

### <Protocol Stack>

An example of a protocol stack of the communication system 10 will be described. In the communication system 10, a series of protocols for transmitting and receiving data is represented in a hierarchical structure and is referred to as a protocol stack. In the following example, a case where the base station device 200 is an eNB or a gNB, and the core network 300 is an EPC or 5GC will be described. Furthermore, the terminal device 100 (user equipment (UE)) corresponds to one or both of E-UTRA and NR.

Hereinafter, a protocol stack of a user plane (U-Plane) and a control plane (C-Plane) will be described. The U-Plane is used, for example, for transmission and reception of user data in communication. The C-Plane is used, for example, for transmission and reception of a control signal (message) in communication. Note that, in each embodiment, unless specifically referred to as "user data", "control signal (message)," or the like, data indicates one or both of the user data and the control signal (message).

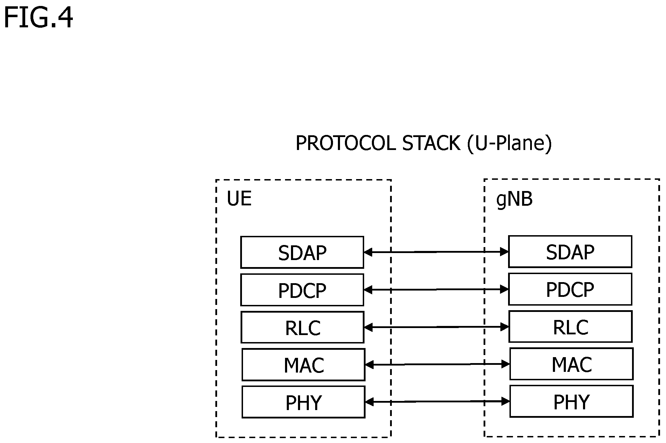

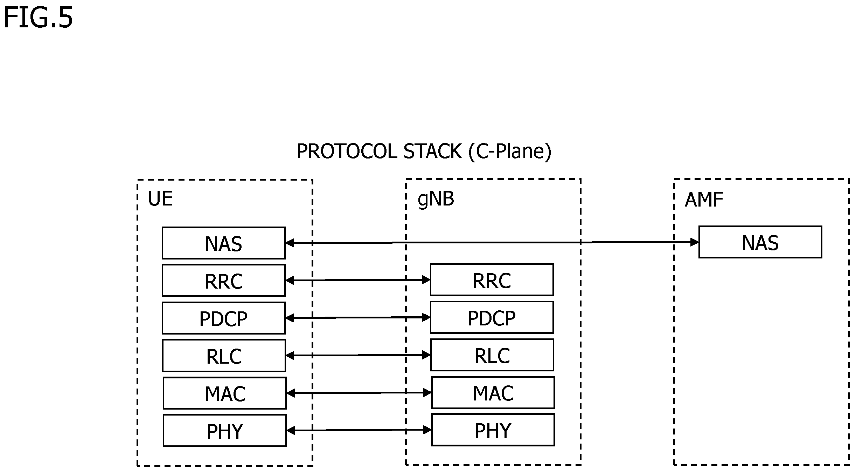

FIG. 4 is a figure illustrating an example of a protocol stack of the U-Plane in a case where the core network 300 is 5GC. In addition, FIG. 5 is a figure illustrating an example of a protocol stack of the C-Plane in a case where the core network 300 is 5GC. In FIG. 4 and FIG. 5, each of physical (PHY), medium access control (MAC), radio link control (RLC), packet data convergence protocol (PDCP), service data adaptation protocol (SDAP), radio resource control (RRC), and non access stratum (NAS) indicates a name of a layer. Hereinafter, each of PHY, MAC, RLC, PDCP, SDAP, RRC, and NAS may be referred to as a PHY layer, a MAC layer, an RLC layer, a PDCP layer, an SDAP layer, an RRC layer, and a NAS layer. In addition, each of MAC, RLC, PDCP, and SDAP may be referred to as a MAC sublayer, an RLC sublayer, a PDCP sublayer, and an SDAP sublayer. In addition, each of MAC, RLC, PDCP, and SDAP may be referred to as a MAC entity, an RLC entity, a PDCP entity, and an SDAP entity. Note that the protocol stack of the U-Plane in a case where the core network 300 is the EPC is a protocol stack in which SDAP in FIG. 4 is not present. That is, it is a protocol stack including PHY, MAC, RLC, and PDCP. In addition, in the protocol stack of the C-Plane in a case where the core network 300 is the EPC, NAS is present in an access and mobility management function (AMF) in FIG. 5, whereas NAS is present in a mobility management entity (MME).

The function in each layer may be common or different depending on whether the RAT is E-UTRA or NR. In the following description, in a case where there is no designation of E-UTRA or NR, the function is common in E-UTRA and NR.

Note that in each sublayer, data provided from an upper layer and data provided to an upper layer are referred to as a Service Data Unit (SDU). That is, data provided from the upper layer to MAC, RLC, PDCP, and SDAP, and data provided from MAC, RLC, PDCP, and SDAP to the upper layer are referred to as a MAC SDU, an RLC SDU, a PDCP SDU, and an SDAP SDU, respectively.

In each sublayer, data provided to a lower layer and data provided from a lower layer are referred to as a Protocol Data Unit (PDU). That is, data provided from MAC, RLC, PDCP, and SDAP to the lower layer, and data provided from the lower layer to MAC, RLC, PDCP, and SDAP are referred to as a MAC PDU, an RLC PDU, a PDCP PDU, and an SDAP PDU, respectively. In addition, a PDU for control is present in the RLC, PDCP, and SDAP, and may be referred to as a control PDU. In addition, in order to distinguish from the control PDU, other PDUs may be referred to as data PDUs.

In FIG. 4, the U-Plane includes PHY, MAC, RLC, PDCP, and SDAP, and terminates at the terminal device 100 (UE) and the base station device 200 (gNB).

An example of the function of the PHY will be described. The PHY is a radio physical layer, and transfers control information and data between the terminal device 100 and the base station device 200 using a physical channel. A direction from the base station device 200 to the terminal device 100 may be referred to as downlink (DL), and a direction from the terminal device 100 to the base station device 200 may be referred to as uplink (UL). Further, in the terminal device 100 and the base station device 200, the PHY is connected to the MAC which is an upper layer through a transport channel, and data is moved between the PHY and the MAC through the transport channel. In the PHY, a radio network temporary identifier (RNTI) is used to identify various kinds of control information.

An example of the function of the MAC will be described. The MAC is a medium access control layer, and performs mapping between a transport channel and a logical channel (LCH), multiplexing and demultiplexing of a MAC SDU, a scheduling report (SR), error correction through hybrid automatic repeat request (HARQ), priority control, and the like. In the terminal device 100 and the base station device 200, the MAC is connected to the RLC which is an upper layer through a logical channel, and data is moved between the MAC and the RLC through the logical channel. The logical channel may be identified by a logical channel identifier (LCID). Further, the base station device 200 controls the terminal device 100 using a MAC control element (CE). In addition, the terminal device 100 performs a report or the like to the base station device 200 using the MAC CE.

The RLC is a radio link control layer, and there are three modes of a transparent mode (TM), an unacknowledged mode (UM), and an acknowledged mode (AM). The RLC performs transfer of the PDU, assignment of a sequence number (in the case of UM and AM), division of the SDU (in the case of UM and AM), and re-division (in the case of AM) on the transmission side, and reassembly of the SDU (in the case of UM and AM), duplicate detection (in the case of AM), and discard of the SDU (in the case of UM and AM) on the reception side, and performs RLC re-establishment and the like on the transmission side and the reception side. The divided SDU is referred to as an SDU segment. In addition, the RLC has a data retransmission function and/or an automatic repeat request function (ARQ) (in the case of AM). Note that, in the case of the E-UTRA RLC, in addition to this, there are data combining on the transmission side, reordering on the reception side, an in-order delivery function, and the like.

The PDCP is a packet data convergence protocol layer, and performs data transfer of U-Plane and C-Plane, PDCP sequence number management, header compression/decompression, encryption/decryption, integrity protection/integrity verification, timer-based SDU discarding, routing to split bearers, reordering, in-order delivery, and the like. Note that, in the E-UTRA PDCP, functions such as timer-based SDU discarding, reordering, and in-order delivery may be limited to the case of a split bearer and the like which will be described later.

The SDAP is a service data adaptation protocol layer, and performs mapping between a quality of service (QoS) flow and a data radio bearer (DRB) which will be described later, marking of a QoS flow identifier (QFI) to a downlink (DL) packet and an uplink (UL) packet, and the like.

Examples of the upper layer of the U-Plane include layers such as Internet Protocol (IP), Transmission Control Protocol (TCP), User Datagram Protocol (UDP), Ethernet (registered trademark), and an application. A layer including IP, TCP, UDP, Ethernet, and the like may be referred to as a PDU layer. An IP Multimedia Subsystem (IMS) that performs session control may be included in the application layer.

In FIG. 5, a C-Plane of an access stratum (AS) includes a PHY, a MAC, an RLC, a PDCP, and an RRC, and terminates at the terminal device 100 and the base station device 200. In addition, the C-Plane of NAS includes NAS and terminates between the terminal device 100 and an AMF which is a device of the core network 300. The PHY, MAC, RLC, and PDCP are similar to those of the U-Plane.

The RRC performs broadcasting and paging of system information (SI) related to AS and NAS, establishment/maintenance/release of an RRC connection between the terminal device 100 and the base station device 200, addition/change/release of carrier aggregation (CA), addition/change/release of dual connectivity (DC), security functions including management of a security key, establishment/configuration/maintenance/release of a signaling radio bearer (SRB) and a data radio bearer (DRB), a mobility function, a QoS management function, control of a terminal device measurement report and reporting, detection and recovery of radio link failure (RLF), transfer of a NAS message, and the like.

The NAS performs authentication, mobility management, security control, and the like on the core network side.

### <Channel>

Channels used in the communication system 10 will be described. Hereinafter, an example of a channel corresponding to NR will be described, but the channel to be used is not limited to the following. In addition, channels having the same name can be used in the same or similar applications in the RAT other than NR, for example, E-UTRA.

### <1. Physical Channels>

A physical broadcast channel (PBCH) is a channel used for transmitting broadcast information from the base station device 200 to the terminal device 100.

A physical downlink control channel (PDCCH) is a channel used for transmitting downlink control information (DCI) and the like from the base station device 200 to the terminal device 100.

A physical downlink shared channel (PDSCH) is a channel used for transmitting data and the like from an upper layer, from the base station device 200 to the terminal device 100.

A physical uplink control channel (PUCCH) is a channel used for transmitting uplink control information (UCI) and the like from the terminal device 100 to the base station device 200.

A physical uplink shared channel (PUSCH) is a channel used for transmitting data and the like from an upper layer, from the terminal device 100 to the base station device 200.

A physical random access channel (PRACH) is a channel used for transmitting a random access preamble and the like from the terminal device 100 to the base station device 200.

### <2. Transport Channels>

A broadcast channel (BCH) is mapped to a PBCH which is a physical channel.

A downlink shared channel (DL-SCH) is mapped to a PDSCH which is a physical channel.

A paging channel (PCH) is mapped to a PDSCH which is a physical channel.

An uplink shared channel (UL-SCH) is mapped to the PUSCH which is a physical channel.

A random access channel (RACH) is mapped to a PRACH which is a physical channel.

### <3. Logical Channels>

A broadcast control channel (BCCH) is a downlink channel for broadcasting system information, and is mapped to a BCH or a DL-SCH which is a transport channel.

### A paging control channel (PCCH) is a downlink channel for carrying a paging message, and is mapped to a PCH which is a transport channel.

A common control channel (CCCH) is a channel for transmitting control information (RRC message and the like) between the terminal device 100 and the base station device 200, and is a channel used for the terminal device 100 that does not maintain (does not have) a RRC connection with the base station device 200, the downlink is mapped to a DL-SCH that is a transport channel, and the uplink is mapped to a UL-SCH that is a transport channel.

A dedicated control channel (DCCH) is a point-to-point bidirectional channel that transmits dedicated control information (RRC message and the like) between the terminal device 100 and the base station device 200, and is used for the terminal device 100 having a RRC connection with the base station device 200, the downlink is mapped to a DL-SCH which is a transport channel, and the uplink is mapped to a UL-SCH which is a transport channel.

A dedicated transport channel (DTCH) is a point-to-point terminal-dedicated bidirectional channel that transmits user information (user data), the downlink is mapped to a DL-SCH which is a transport channel, and the uplink is mapped to a UL-SCH which is a transport channel.

An MBS control channel (MCCH) is a point-to-multipoint downlink channel, and is used to transmit multicast broadcast service (MBS) broadcast control information corresponding to one or a plurality of MBS traffic channels (MTCH) from the base station device 200 to the terminal device 100. The MCCH is mapped to a DL-SCH which is a transport channel.

The MTCH is a point-to-multipoint downlink channel and is used to transmit data of a multicast session or data of a broadcast session of the MBS from the base station device 200 to the terminal device 100. The MCCH is mapped to a DL-SCH which is a transport channel.

### <RRC State (Mode)>

The RRC state of the terminal device 100 is a state related to RRC connection of the terminal device 100. A state in which RRC connection with the base station device 200 is not established is referred to as an RRC idle mode (RRC_IDLE). A state in which RRC connection with the base station device 200 is established is referred to as an RRC connected mode (RRC_CONNECTED). A state in which RRC connection with the base station device 200 is temporarily stopped (suspended) is referred to as an RRC inactive mode (RRC_INACTIVE). In a case where the core network 300 is the EPC, a state in which RRC connection with the base station device 200 is temporarily stopped is not referred to as the RRC inactive mode, and may be referred to as another name such as RRC suspension.

### <RRC Message>

An RRC message will be described. The RRC message is a message including information that is needed to perform communication in a cell, and includes a Master Information Block (MIB), a System Information Block (SIB), and the like. A parameter included in the RRC message may be referred to as a field or an information element (IE).

The RRC message includes a message related to establishment of RRC connection. Examples of the message related to establishment of RRC connection include an RRC setup request message (RRCSetupRequest), an RRC setup message (RRCSetup), and an RRC setup completion message (RRCSetupComplete) in the case of NR. Further, examples of the message related to establishment of RRC connection include an RRC connection setup request message (RRCConnectionSetupRequest), an RRC connection setup message (RRCConnectionSetup), and an RRC connection setup completion message (RRCConnectionSetupComplete) in the case of E-UTRA.

The RRC message includes a message related to initial activation of access stratum (AS) security. Examples of the message related to the initial activation of the AS security include a security mode command message (SecurityModeCommand).

The RRC message includes a message related to reconfiguration of RRC connection. Examples of the message related to reconfiguration of RRC connection include an RRC reconfiguration message (RRCReconfiguration) and an RRC reconfiguration completion message (RRCReconfigurationComplete) in the case of NR. Examples of the message related to reconfiguration of RRC connection include an RRC connection reconfiguration message (RRCConnectionReconfiguration) and an RRC connection reconfiguration completion message (RRCConnectionReconfigurationComplete) in the case of E-UTRA. Note that the message regarding reconfiguration of RRC connection performs establishment, configuration, change, and release of a radio bearer, a cell group, and the like which will be described later, and reconfiguration with synchronization, and the like, and also performs establishment, configuration, change, and release of measurement information and the like.

After the initial activation of the AS security is performed, the terminal device 100 receives a first RRC reconfiguration message from the base station device 200 to obtain all configurations that are needed for communication (data communication) with the base station device 200 in a cell to which the terminal device 100 is connected or all minimum necessary configurations. All the configurations that are needed for communication (data communication) with the base station device 200 or all the minimum necessary configurations may be referred to as, for example, complete configurations.

After the initial activation of the AS security of the terminal device 100, the base station device 200 can transmit the first RRC reconfiguration message, further transmit another RRC reconfiguration message, and cause the terminal device 100 to update configuration needed for communication (data communication) with the base station device 200. In this case, the base station device 200 includes configuration of a difference for the complete configuration currently configured in the terminal device 100 in the RRC reconfiguration message and transmits the RRC reconfiguration message. The configuration of the difference may be referred to as delta configuration. Upon receiving the RRC reconfiguration message including the delta configuration, the terminal device 100 generates new configuration by applying the delta configuration to the complete configuration currently used.

In addition, the RRC message includes a message related to re-establishment of RRC connection. Examples of the message related to the re-establishment of the RRC connection include an RRC re-establishment request message (RRCReestablishRequest), an RRC re-establishment message (RRCReestablish), an RRC re-establishment completion message (RRCReestablishComplete), and the like in the case of NR. Examples of the message related to the establishment of the RRC connection include an RRC connection re-establishment request message (RRCConnectionReestablishRequest), an RRC connection re-establishment message (RRCConnectionReestablish), an RRC connection re-establishment completion message (RRCConnectionReestablishComplete), and the like in the case of E-UTRA.

In addition, the RRC message further includes a message related to release or suspension of RRC connection, a message related to resumption of RRC connection, a message related to capability of the terminal device, a message related to terminal information, a message related to MCG failure information or SCG failure information, and the like.

Note that, in the MR-DC, in a case where the master node is an eNB, the eNB may include an NR RRC message and a parameter received from a gNB that is a secondary node in the E-UTRA RRC message as a container, and transmit the E-UTRA RRC message to the terminal device 100 to perform configuration related to the NR in the terminal device 100. Further, the terminal device 100 may include a completion message for the configuration related to the NR in the RRC message of the E-UTRA as a container, and transmit the completion message to the eNB which is the master node.

Furthermore, in the MR-DC, in a case where the master node is a gNB, the gNB may include an RRC message and a parameter of the E-UTRA received from an eNB which is a secondary node in the RRC message of the NR as a container and transmit the RRC message to the terminal device 100 to perform configuration related to the E-UTRA in the terminal device 100. Further, the terminal device 100 may include a completion message for the configuration related to the E-UTRA as a container in the RRC message of the NR and transmit the message to the gNB which is the master node.

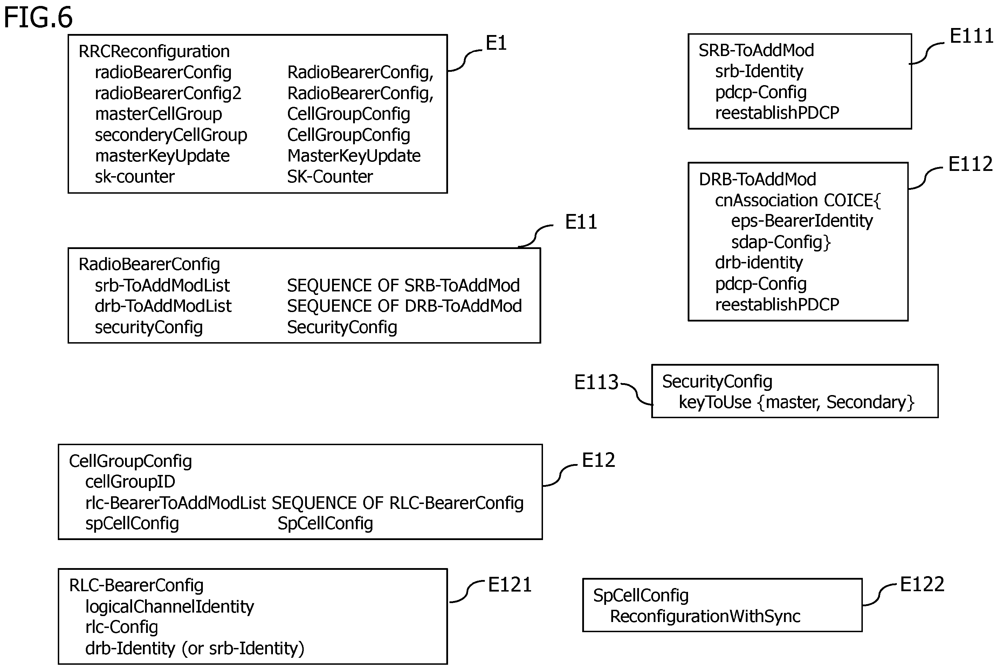

FIG. 6 is a figure illustrating an example of a message format of RRCReconfiguration. Format E1 is a parameter of RRC Reconfiguration.

RRC Reconfiguration has radioBearerConfig, radioBearerConfig2, masterCellGroup, seconderyCellGroup, masterKeyUpdate, and sk-counter as parameters.

radioBearerConfig and radioBearerConfig2 are configurations related to the MN terminated bearer or the SN terminated bearer, and include an SRB configuration, a DRB configuration, a security configuration, and the like. The SRB configuration (DRB configuration) includes an SRB identifier (DRB identifier), a PDCP configuration, a parameter indicating PDCP re-establishment, and the like. The security configuration includes a parameter (keyToUse) indicating whether to use a master key or a secondary key.

The masterCellGroup and the seconderyCellGroup are respectively an MCG configuration and an SCG configuration, and include a cell group identifier, an RLC bearer configuration, a SpCell configuration, and the like. The RLC bearer configuration includes a logical channel identifier, an RLC configuration, a radio bearer identifier (SRB identifier or DRB identifier) with which the RLC bearer is associated, and the like. The SpCell configuration includes information needed for reconfiguration with synchronization, and the like.

The masterKeyUpdate includes information needed to update the master key.

The sk-counter includes information needed to generate the secondary key.

Format E11 is a figure illustrating an example of parameters of RadioBearerConfig included in RRCReconfiguration.

Format E12 is a figure illustrating an example of parameters of CellGroupConfig included in RRCReconfiguration.

Format E111 is a figure illustrating an example of parameters of SRB-ToAddMod included in RadioBearerConfig.

Format E112 is a figure illustrating an example of parameters of DRB-ToAddMod included in RadioBearerConfig.

Format E113 is a figure illustrating an example of parameters of SecurityConfig included in RadioBearerConfig.

Format E121 is a figure illustrating an example of parameters of RLC-BearerConfig included in CellGroupConfig.

Format E122 is a figure illustrating an example of parameters of SpCellConfig included in CellGroupConfig.

### <Radio Bearers>

Examples of radio bearers of the communication system 10 will be described.

### <1. Signaling Radio Bearer>

A signaling radio bearer (SRB) is a radio bearer for transmitting RRC messages and NAS messages.

SRB0 is a radio bearer for an RRC message using a CCCH logical channel.

SRB1 is a radio bearer for an RRC message and a NAS message using a DCCH logical channel, and is established before SRB2 which will be described later is established.

SRB2 is a radio bearer for transmission and reception of a NAS message, transmission of an RRC message including measurement information in which a history is recorded (logged), and the like, and uses a DCCH logical channel. The priority of SRB2 is lower than that of SRB1, and may be configured by the base station device 200 after AS security is activated.

SRB3 is a radio bearer for an RRC message in a case where EN-DC, NGEN-DC, or NR-DC is configured in the terminal device 100, and uses a DCCH logical channel. Note that EN-DC, NGEN-DC, and NR-DC are types of MR-DC, and details of the types of MR-DC will be described later.

### <2. Data Radio Bearer>

A data radio bearer (DRB) is a radio bearer for transmitting user data.

### <Protocol Configuration of SRB and DRB>

A protocol configuration of the SRB and the DRB of the terminal device 100 will be described.

A PDCP entity is not present in the SRBO, and the SRB0 is configured by an RLC bearer. The RLC bearer includes an RLC entity and a MAC logical channel. A mode of the RLC entity of the SRB0 is TM.

Each of SRB1 and SRB2 includes one PDCP entity and one or a plurality of RLC bearers. A mode of the RCL entity is AM.

SRB3 includes one PDCP entity and one RLC bearer. A mode of the RLC entity is AM.

The DRB includes one PDCP entity and one or a plurality of RLC bearers. A mode of the RLC entity is UM or AM. The DBR may be referred to as a UM DBR in a case where the RLC entity is UM, and may be referred to as an AM DRB in a case where the RLC entity is AM. In addition, the DRB is associated with one SDAP in a case where the core network 300 is 5GC, and is associated with one EPS bearer (or EPS bearer identity) in a case where the core network 300 is EPC.

Note that one MAC entity is assumed to be present for each cell group, which will be described later.

### <Cell and Cell Group>

A cell and a cell group (CG) configured in the terminal device 100 will be described.

The cell group may include one special cell (SpCell). The cell group may include one SpCell and one or a plurality of secondary cells (SCells). Note that a SpCell in a master cell group (MCG) which will be described later may be referred to as a primary cell (PCell). In addition, a SpCell in a secondary cell group (SCG) which will be described later may be referred to as a primary SCG cell (PSCell).

The PCell is a cell of a primary frequency, and is used to establish RRC connection or re-establish RRC connection. That is, when RRC connection is established or RRC connection is re-established, a cell selected by the terminal device 100 is the PCell. In addition, when the base station device 200 requests a handover of the terminal device 100, which will be described later, a new PCell designated by the base station device 200 is used for random access.

The SCell is a cell that provides additional radio resources in addition to the SpCell in a case where carrier aggregation (CA) is configured in the terminal device 100.

The PSCell is a cell of a primary frequency on the SCG side. The PSCell is specified by the base station device 200, and is used for random access when adding or changing the PSCell in the SCG.

Note that a cell used by the terminal device 100 in an RRC connected state for communication with the base station device 200 may be referred to as a serving cell. When CA is not configured, the SpCell is a serving cell, and when CA is configured, the SpCell and the SCell are serving cells.

The MCG is a CG in a case where dual connectivity (DC) is not configured in the terminal device 100 or a CG belonging to a master node (MN) in a case where DC is configured in the terminal device 100. DC is a technology in which the terminal device 100 is wirelessly connected to the base station device 200 as a master node and the base station device 200 as a secondary node (SN), and performs wireless communication using carriers (cell groups) of the respective base station devices 200.

The SCG is a CG belonging to a secondary node configured in addition to the MCG in a case where DC is configured in the terminal device 100.

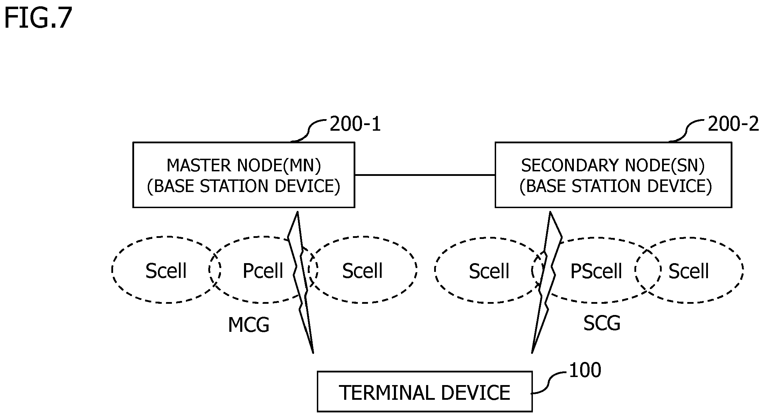

FIG. 7 is a figure illustrating an example of a configuration of a cell group of the communication system 10. In FIG. 7, the master node (MN) is the base station device 200-1, and the secondary node (SN) is the base station device 200-2. The master node is the base station device 200 that provides C-Plane connection to the core network 300 in DC. The secondary node is the base station device 200 that does not provide the C-Plane to the core network 300 and provides additional radio resources to the terminal device 100 in MR-DC. In FIG. 7, the MCG includes one PCell and two SCells. In addition, in FIG. 7, the SCG includes one PSCell and two SCells.

Note that the base station device 200 may configure a BandWidth Part (BWP) in a cell to be set in the terminal device 100 and perform adjustment such that a limited frequency band is used among all frequency bands of the cell. The BWP may be configured from a partial frequency bandwidth of the frequency band of each cell. Further, a plurality of (for example, up to four) BWPs may be configured for each cell. The BWP may be configured by the RRC reconfiguration message. In each cell, the BWP to be used may be designated or switched by the RRC reconfiguration message or by using DCI.

### <Reconfiguration with Synchronization>

Reconfiguration with synchronization will be described. The reconfiguration with synchronization (Reconfiguration With Sync) indicates a procedure executed in the terminal device 100 by including, in the RRC reconfiguration message (RRCReconfiguration) transmitted from the base station device 200 to the terminal device 100, a parameter (reconfigurationWithSync: hereinafter it may be referred to as a reconfiguration-with-synchronization parameter) indicating that reconfiguration with synchronization is to be performed.

The reconfiguration-with-synchronization parameter is separately included under a parameter (hereinafter, it may be referred to as an MCG configuration parameter) for MCG configuration and under a parameter (hereinafter, it may be referred to as an SCG configuration parameter) for SCG configuration. That is, the reconfiguration-with-synchronization parameter means reconfiguration with synchronization of the MCG in a case where the parameter is included under the MCG configuration parameter, and reconfiguration with synchronization of the SCG in a case where the parameter is included under the SCG configuration parameter.

The reconfiguration with synchronization is a procedure in which the terminal device 100 changes the SpCell, and includes operations such as random access to a new (change destination, target) SpCell, MAC reset, and PDCP data recovery (in the case of AM DRB).

Processing in a case where the reconfiguration-with-synchronization parameter is included under the MCG configuration parameter may be referred to as a handover. In addition, processing in a case where the reconfiguration-with-synchronization parameter is included under the SCG configuration parameter may be referred to as PSCell addition and/or PSCell change. In addition, the PCell/PSCell of a change source may be referred to as source PCell/source PSCell, and the PCell/PSCell of a change destination may be referred to as target PCell/target PSCell. Since the reconfiguration with synchronization may involve CA, the term "serving cell" may be used to refer to a source serving cell and a target serving cell. In addition, a source cell and a target cell may be referred to by omitting the term "serving".

The terminal device 100 may generate the configuration of the target cell by applying the delta configuration included in the RRC reconfiguration message to the configuration of the source cell.

The reconfiguration with synchronization may involve changing the security key. In this case, in addition to the above, PDCP re-establishment is performed.

When the security key is changed, a new key is generated by the RRC of the terminal device 100, and the PDCP is re-established, so that the new key is applied to the PDCP.

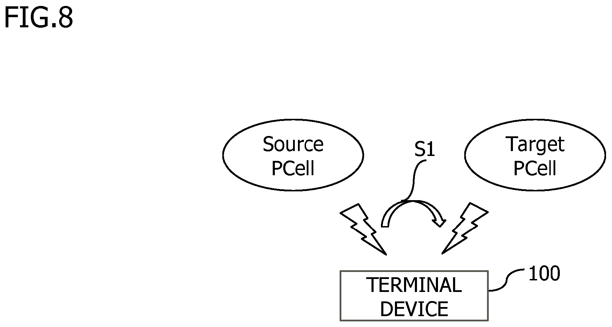

FIG. 8 is a figure illustrating an example of processing in a case where the reconfiguration-with-synchronization parameter is included under the parameter for configuring the MCG. The reconfiguration-with-synchronization parameter includes configuration such as configuration of a target PCell, a new Cell Radio Network Temporary Identifier (C-RNTI), RACH configuration, and a timer for detecting handover failure. The terminal device 100 performs random access (RA) in the target PCell according to the configuration, and changes the current source PCell to the target PCell (S1).

### <Random Access during Handover>

Random access during a handover includes Contention Free Random Access (CFRA), which is a type of random access without contention, and contention-based random access. There is Contention-Based Random Access (CBRA), and there are a case where it is performed in four steps and a case where it is performed in two steps.

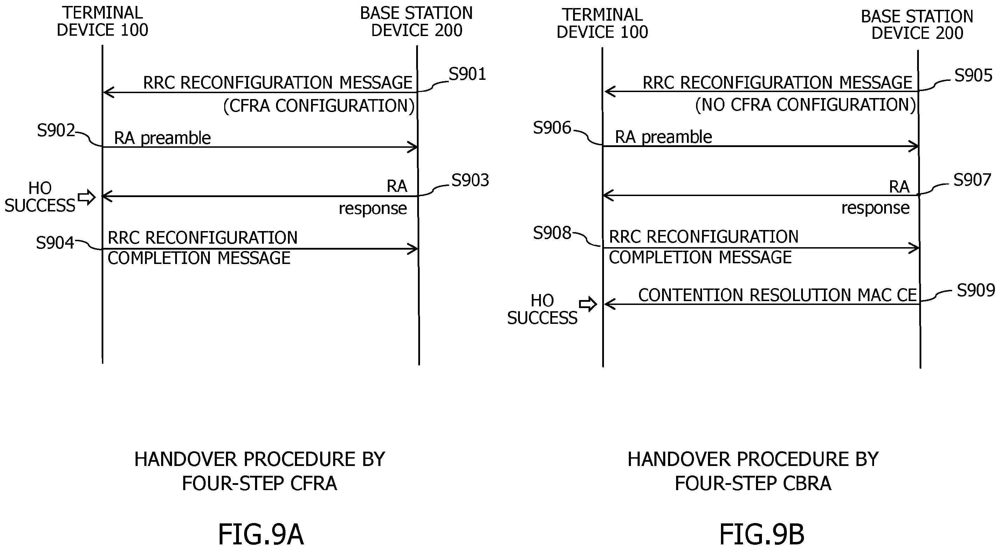

FIG. 9 is a figure illustrating a handover procedure by four-step random access. FIG. 9A illustrates a handover procedure by four-step CFRA, and FIG. 9B illustrates a handover procedure by four-step CBRA.

The sequence of FIG. 9A will be described.

The base station device 200 transmits an RRC reconfiguration message including the reconfiguration-with-synchronization parameter to the terminal device 100 (S901).

In a case where the four-step CFRA configuration is included in the reconfiguration-with-synchronization parameter and there is a reference signal whose reference signal received power (RSRP) is equal to or greater than a threshold among reference signals designated in the four-step CFRA configuration, the terminal device 100 executes a handover by the four-step CFRA. Further, in a case where the two-step CFRA configuration is included in the reconfiguration-with-synchronization parameter and there is a reference signal whose RSRP is equal to or greater than the threshold among reference signals designated in the two-step CFRA configuration, the terminal device 100 executes a handover by the two-step CFRA. Furthermore, in a case where the four-step CFRA configuration and the two-step CFRA configuration are not included in the reconfiguration-with-synchronization parameter, or in a case where the four-step CFRA configuration or the two-step CFRA configuration is included in the reconfiguration-with-synchronization parameter, but a reference signal whose RSRP is equal to or greater than the threshold is not present among the reference signals designated in the four-step CFRA configuration or two-step CFRA configuration, the terminal device 100 executes the four-step or two-step CBRA.

The terminal device 100 transmits a random access preamble (RA preamble) to the base station device 200 on the target PCell (S902).

When the random access preamble is received (S902), the base station device 200 transmits a random access response (RA response) (S903).

In the case of CFRA, the preamble is included in the CFRA configuration, and therefore, contention resolution does not have to be performed. Therefore, the handover is successful at the time when the terminal device 100 receives the random access response on the target PCell.

When the random access response is received (S903), the terminal device 100 transmits, to the base station device 200 on the target serving cell, an RRC reconfiguration completion message, which is a response message to the RRC reconfiguration message (S904).

Next, the sequence of FIG. 9B will be described.

The base station device 200 transmits an RRC reconfiguration message including the reconfiguration-with-synchronization parameter to the terminal device 100 (S905). Since the CFRA configuration is not included in the reconfiguration-with-synchronization parameter, the terminal device 100 executes a handover (two steps or four steps) using CBRA.

The terminal device 100 transmits a random access preamble to the base station device 200 on the target PCell (S906).

When the random access preamble is received (S906), the base station device 200 transmits a random access response (S907).

In the case of CBRA, since an arbitrary random access preamble is used, there is a possibility of contention with a random access preamble transmitted by another terminal device. Therefore, the handover is not yet considered to be successful at the time when the terminal device 100 receives the random access response (S907).

When the random access response is received (S907), the terminal device 100 transmits an RRC reconfiguration completion message to the base station device 200 on the target serving cell (S908).

When the RRC reconfiguration completion message is received (S908), the base station device 200 transmits a MAC CE indicating contention resolution to the terminal device 100 on the target serving cell (S909).

In the case of CBRA, the handover is successful at the time when the terminal device 100 receives the MAC CE indicating the contention resolution (S909).

That is, in the handover by the four-step CFRA, the RRC reconfiguration completion message is transmitted (S904) after the handover succeeds, but in the handover by the four-step CBRA, the RRC reconfiguration completion message is transmitted (S908) before the handover succeeds.

In a case where the amount of uplink resources allocated in step S907 is sufficiently large, the terminal device 100 can transmit uplink data generated on the DRB in addition to the RRC reconfiguration completion message in step S908. That is, in the handover using the four-step CBRA, there is a possibility that the uplink data generated in the DRB is transmitted before the handover succeeds.

In the case of the handover using the two-step random access, in both the CBRA and the CFRA, the terminal device 100 transmits the RRC reconfiguration completion message in step S904 after transmitting the random access preamble in step S902 and before receiving the random access response in step S903. That is, in the handover by the two-step random access, in either case of the CFRA or the CBRA, since the RRC configuration completion message is transmitted before the handover succeeds, there is a possibility that the uplink data generated in the DRB is transmitted before the handover succeeds.

In addition, in a handover in the E-UTRA, there is a case where a RACH-less handover which is a handover in which random access is not performed is performed. In the RACH-less handover, the RRC reconfiguration completion message is transmitted to the base station device 200 on the target serving cell without performing random access, and the handover is successful at the time when the MAC CE indicating the contention resolution is received from the base station device 200 on the target serving cell. That is, in the RACH-less handover, since the RRC reconfiguration completion message is sent before the handover succeeds, there is a possibility that the uplink data generated in the DRB is transmitted before the handover succeeds.

### <Handover Failure Processing>

In a case where the terminal device 100 that has received the RRC reconfiguration message including the reconfiguration-with-synchronization parameter does not succeed in a handover within a certain period of time, the handover fails. The fact that a handover does not succeed within a certain period of time may mean that the timer for handover failure detection, which starts when the RRC reconfiguration message including the reconfiguration-with-synchronization parameter is received, expires before the handover succeeds.

In a case where the handover fails, the terminal device 100 reverts the configuration to the configuration used in the source PCell and performs the RRC connection re-establishment procedure. When reverting to the configuration used in the source PCell, the value of a state variable in each entity of each radio bearer is also reverted to the value used in the source (the value immediately before handover processing).

In the RRC connection re-establishment procedure, the terminal device 100 performs cell selection, and transmits the RRC re-establishment request message (RRCReestablishmentRequest) to the base station device 200 in a case where the NR cell is selected. The RRC re-establishment request message is transmitted through the SRB0. Since the PDCP entity is not present in the SRBO, security processing by the PDCP is not performed for the RRC re-establishment request message. When the RRC re-establishment message (RRCReestablishment) which is a response message to the RRC re-establishment request message is received from the base station device 200, the security key of the terminal device 200 is updated.

### <Conditional Handover>

The conditional handover (CHO) is a handover that is executed by the terminal device 100 (in a terminal-initiated manner) at the time when one or more handover execution conditions are satisfied. The terminal device 100 receives an RRC reconfiguration message including a conditional reconfiguration parameter from the base station device 200, and stores the conditional reconfiguration parameter. The conditional reconfiguration parameter includes one or more pairs of configuration parameters for a PCell change destination candidate, including the reconfiguration-with-synchronization parameter, and execution condition parameters for executing a handover to the PCell change destination candidate. The execution condition parameters include, for example, a parameter related to measurement configuration. When the conditional reconfiguration parameter is received, the terminal device 100 starts measurement of a cell, and in a case where any PCell of the measured cell satisfies the execution conditions, applies the configuration parameters of the PCell change destination candidate of the PCell that satisfies the execution conditions, and performs a conditional handover to the PCell. The terminal device 100 releases the conditional reconfiguration parameter after the conditional handover succeeds.

Note that the conditional reconfiguration parameter can include one or a plurality of pairs of the SCG-side configuration, that is, the configuration parameter of the PSCell change destination candidate and the execution condition parameter for executing the change to the PSCell change destination candidate. The terminal device 100 starts measurement of execution conditions when the conditional reconfiguration parameter on the SCG side is received, and performs a conditional PSCell change (CPC) in a case where the measurement result satisfies the execution conditions.

In the conditional handover, a handover failure is detected similarly to an unconditional handover (hereinafter, it may be simply referred to as handover), and processing after handover failure is performed. In the RRC connection re-establishment procedure after the conditional handover failure or the handover failure, in a case where the selected cell is the PCell change destination candidate, the terminal device 100 transmits the RRC reconfiguration completion message to attempt the handover instead of transmitting the RRC re-establishment request message to the base station device 200, and can recover the RRC connection. In a case where the cell selected by the terminal device 100 is the PCell change destination candidate, the RRC reconfiguration completion message can be sent instead of sending the RRC re-establishment request message to the base station device 200 only in a case where a conditional reconfiguration attempt parameter (attemptCondReconfig), which is a parameter for permitting the processing, is configured in the terminal device 100.

### <AS Security and Key Stream>

Processing of AS security is performed in the PDCP entity of a radio bearer other than the SRB0 by using a security key (ciphering key or integrity protection key) generated by RRC. The AS security processing includes ciphering and integrity protection, which are executed using a ciphering key and an integrity protection key, respectively.

When a PDCP SDU is received from the upper layer, the PDCP entity of each radio bearer performs the AS security processing on the received PDCP SDU by using an input called a key stream. The key stream includes four elements, for example, KEY, COUNT, BEARER, and DIRECTION.

KEY indicates, for example, a security key.

COUNT is one of state variables of the PDCP entity, and indicates, for example, a sequence number. A COUNT value has an initial value of '0' and is increased by 1 every time the PDCP PDU is passed to the lower layer. The maximum value of the COUNT value is, for example, a value obtained by subtracting 1 from 2 raised to the power of 32, that is, '4294967295.'

BEARER indicates, for example, a value of a radio bearer identifier. DIRECTION indicates uplink or downlink, and is '0' for uplink and '1' for downlink.

In the AS security, the key stream is prohibited from being reused (key stream reuse) from the viewpoint of security. For example, in the terminal device 100, in a case where data is transmitted from a certain radio bearer, unless the security key is updated, it is prohibited to perform the AS security processing using the COUNT value used in the past in this radio bearer.

Note that the definition of the term "key stream" may be somewhat different depending on the specification. In the present embodiment, the key stream will be described as four elements, KEY, COUNT, BEARER, and DIRECTION.

### [Embodiments]

Hereinafter, each embodiment will be described.

### <L1/L2 Triggered Mobility>

An example of an overview of L1/L2 Triggered Mobility (LTM) which is currently under specification will be described.

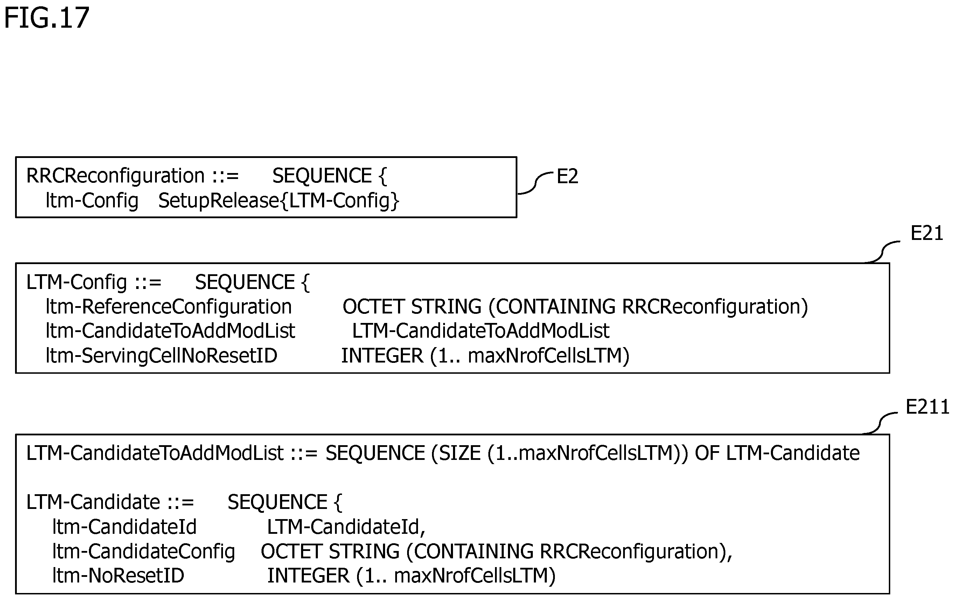

FIG. 17 is a figure illustrating an example of parameters related to the LTM included in the RRCReconfiguration message. In FIG. 17, the parameters described in FIG. 6 are omitted. In addition, parameters other than the parameter examples illustrated in FIG. 17 may be included. In addition, the name of a parameter is an example, and may not be as described above.

Format E2 is a parameter of RRC Reconfiguration. RRC Reconfiguration includes Itm-Config which means LTM configuration. Itm-Config means new setting or change of the LTM configuration in a case where LTM-Config is included in SetupRelease, and a solution for the LTM configuration in a case where nothing is included in SetupRelease.

Format E21 is a parameter included in the LTM configuration. Itm-ReferenceConfiguration is a reference configuration which will be described later. Itm-CandidateToAddModList is a list of configurations of cell change destination candidates. That is, Itm-CandidateToAddModList includes one or a plurality of configurations of cell change destination candidates. Itm-ServingCellNoResetID is an identifier used when the terminal device 100 determines whether L2 reset (Layer2 reset) is needed at the time of cell switching which will be described later. The initial value of Itm-ServingCellNoResetID or Itm-ServingCellNoResetID may be a group identifier of a serving cell used when the base station device 200 transmits an RRC reconfiguration message including the configurations of cell change destination candidates to the terminal device 100 in step S1001 which will be described later. Itm-ServingCellNoResetID may be stored in the terminal device 100 as a variable indicating the group identifier of the current serving cell. In addition, Itm-ServingCellNoResetID is a parameter that is needed in a case where an LTM configuration is newly set, and is not present in other cases.

Format E211 is a parameter included in configurations of cell change destination candidates. LTM-Candidate is a configuration of a cell change destination candidate. Itm-CandidateId is an identifier or an index that uniquely identifies one or a plurality of configurations of cell change destination candidates in the terminal device 100. Itm-CandidateConfig is a parameter for generating a configuration used in a cell switching destination (target). Itm-CandidateConfig may be a complete configuration as will be described later, or may be a delta configuration. Itm-CandidateConfig may be configured by parameters included in the RRC reconfiguration message. Itm-NoResetID is an identifier used when the terminal device 100 determines whether L2 reset (Layer2 reset) is needed at the time of cell switching which will be described later. Itm-NoResetID may be a group identifier of a cell of a cell change destination candidate. Note that L2 reset (Layer2 reset) is an example of first processing. Note that LTM-Config is an example of a first parameter. Itm-ServingCellNoResetID is an example of a second parameter. Itm-NoResetID is an example of a third parameter.

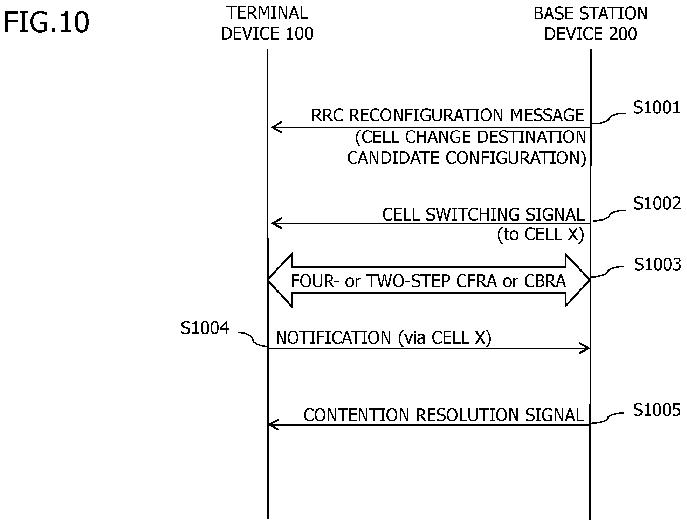

FIG. 10 is a figure illustrating an example of a sequence of LTM.

The base station device 200 includes one or more configurations of cell change destination candidates (configurations of target cell candidates) in the RRC reconfiguration message and transmits the RRC reconfiguration message to the terminal device 100 (S1001).

Upon receiving the RRC reconfiguration message (S1001), the terminal device 100 stores information of the LTM configuration (including configurations of cell change destination candidates) included in the received message. In addition, the terminal device 100 may store the value of Itm-ServingCellNoResetID included in the LTM configuration in a variable indicating the group identifier of the current serving cell.

Note that the cell change destination candidate may be, for example, only the PCell or may include the SCell. The configuration of each cell change destination candidate only needs to be able to be uniquely identified in the terminal device 100 using the index (Itm-CandidateId). The configurations of cell change destination candidates do not include a parameter indicating update of the security key. That is, the security key based on the LTM is not updated. Further, the configurations of the cell change destination candidates may include a parameter similar to the reconfiguration-with-synchronization parameter.

Note that the terminal device 100 may hold the configurations of the cell change destination candidates received and stored in step S1001 without releasing the configuration after cell switching succeeds as described later. In this case, the held configurations of the cell change destination candidates may be used for subsequent cell switching. However, in a case where the configurations of the cell change destination candidates are held and used for subsequent cell switching, there may be a case where the configurations of the cell change destination candidates cannot be set to delta configurations, and the delta configurations cannot be applied to a source configuration to generate a target cell configuration. This event occurs due to a difference in source configuration depending on the order of cells changed by cell switching.

Therefore, in step S1001, the RRC reconfiguration message may include reference configuration in addition to the configurations of the cell change destination candidates or as a part of the configurations of the cell change destination candidates. The reference configuration is used, for example, to complete the configuration used in the cell switching destination (target). In a case where the reference configuration is included in the RRC reconfiguration message, the configuration of each cell change destination candidate included in the RRC reconfiguration message may be configuration (delta configuration) of a difference from the reference configuration. That is, the terminal device 100 can generate the configuration used in a cell switching destination (target), that is, the complete configuration used in the cell switching destination, from the reference configuration and the configurations (delta configurations) of the cell change destination candidates. For example, upon receiving a cell switching signal to cell X which is a cell change destination candidate from the base station device 200 in step S1002 which will be described later, the terminal device 100 generates a configuration used in cell X by applying the configuration of cell X to the reference configuration.

In step S1001, the RRC reconfiguration message may not include the reference configuration. In a case where the reference configuration is not included in the RRC reconfiguration message, the configuration of each cell change destination candidate included in the RRC reconfiguration message is, for example, a complete configuration. That is, the terminal device 100 can generate the configuration used in the cell switching destination (target) by replacing the configuration used in the current cell with the configuration of the cell change destination candidate. For example, upon receiving the cell switching signal to cell X which is the cell change destination candidate from the base station device 200 in step S1002 which will be described later, the terminal device 100 generates the configuration used in cell X by replacing the configuration of the current cell with the configuration of cell X. However, in a case where the configuration of the cell change destination candidate is set to a complete configuration, some configurations may not be included. The some configurations include, for example, configuration that is not changed by cell switching (fixed configuration). The configuration (fixed configuration) that is not changed by cell switching includes, for example, some or all radio bearer configurations. In this case, upon receiving the cell switching signal to cell X which is the cell change destination candidate from the base station device 200, the terminal device 100 generates the configuration used in cell X by replacing the configuration of the current cell with the configuration of cell X except for fixed configuration.

Note that the terminal device 100 does not need to revert some or all of the values of the state variable, the timer, and the like used in each entity (an SDAP entity, a PDCP entity, an RLC entity, a MAC entity, or the like) to the initial states when generating the configuration used in the cell switching destination regardless of whether the reference configuration is included or not in the RRC reconfiguration message. In addition, the terminal device 100 does not need to discard some or all of buffers in each entity. That is, the terminal device 100 can hold some or all the values of the state variable, the timer, and the like used by each entity. Furthermore, the terminal device 100 may hold some or all of buffers in each entity.

The base station device 200 transmits, to the terminal device 100, a cell switching signal for switching the serving cell of the terminal device 100 from the current serving cell to one of the cell change destination candidates (S1002). The cell switching signal is an example of the first signal.

The terminal device 100 receives the cell switching signal in the current serving cell (S1002). For example, MAC CE is used as the cell switching signal. Alternatively, a physical layer signal such as DCI may be used as the cell switching signal.

The cell switching signal includes at least an index (Itm-CandidateId). The terminal device 100 applies the configuration of the cell change destination (referred to as cell X) designated by the received cell switching signal. Note that cell X may include only the PCell, or may include the PCell and one or a plurality of SCells.

The terminal device 100 performs four-step or two-step CFRA or CBRA with the base station device 200 in cell X according to the configuration of cell X (S1003). In addition, in a case where a parameter indicating that RACH-less cell switching is performed is included in the configuration of cell X, the processing in step S1003 is not performed. In a case where Itm-NoResetID of cell X is the same as Itm-ServingCellNoResetID or the variable indicating the group identifier of the current serving cell, the terminal device 100 does not perform L2 reset. In a case where Itm-NoResetID of cell X is not the same as Itm-ServingCellNoResetID or the variable indicating the group identifier of the current serving cell, the terminal device 100 performs L2 reset and overwrites Itm-ServingCellNoResetID or the variable indicating the group identifier of the current serving cell with Itm-NoResetID of cell X. L2 reset is, for example, RLC re-establishment. L2 reset is, for example, PDCP data recovery.

The terminal device 100 transmits a notification indicating that the cell has been switched, to the base station device 200 in cell X (S1004). The notification corresponds to the RRC reconfiguration completion message in a handover or a conditional handover. For the notification indicating that the cell has been switched, an RRC message such as the RRC reconfiguration completion message may be used, or the MAC CE may be used. For the notification indicating that the cell has been switched, a physical signal such as UCI may be used.

In addition, the notification indicating that the cell has been switched may include at least the identifier of the terminal device 100 in cell X. Note that, in a case where two-step CFRA or CFRA is performed in step S1003, the notification indicating that the cell has been switched is transmitted before the random access response is received in step S1003. In addition, uplink data generated in the DRB may be transmitted together with the notification indicating that the cell has been switched.

In a case where four-step or two-step CBRA is performed or in a case where RACH-less cell switching is performed in step S1003, the base station device 200 transmits a contention resolution signal to the terminal device 100 (S1005).

For example, the terminal device 100 receives the contention resolution signal in cell X (S1005). The contention resolution signal may include at least the identifier of the terminal device 100 in cell X.

The timing at which cell switching is successful may be similar to handover success in the handover or the conditional handover. That is, in the case of cell switching using four-step or two-step CFRA, cell switching is successful at the time when the random access response is received. In addition, in the case of cell switching using four-step or two-step CBRA or RACH-less cell switching, cell switching is successful at the time when contention resolution is performed. In a case where the timing at which cell switching is successful is similar to handover success in the handover or the conditional handover, similarly to the handover in the handover or the conditional handover, in cell switching using four-step CFRA, neither the notification indicating that the cell has been switched nor uplink data generated in the DRB is transmitted before the cell switching is successful. However, in the case of cell switching using four-step CBRA, cell switching using two-step CFRA or CBRA, and RACH-less cell switching, the notification indicating that the cell has been switched may be transmitted before the cell switching is successful, and the uplink data generated in the DRB may be transmitted together with the notification.

Note that the terminal device 100 may perform downlink synchronization and/or uplink synchronization with one or a plurality of cell change destination candidates before the cell switching signal is transmitted in step S1002 after executing step S1001. The base station device 200 may measure the timing advance (TA) of one or a plurality of cell change destination candidates of the terminal device 100 in the uplink synchronization. The uplink synchronization may be executed by the base station device 200 instructing the terminal device 100 to transmit a random access preamble. The base station device 200 may instruct the terminal device 100 to transmit different random access preambles to one or a plurality of cell change destination candidates, or may instruct the terminal device 100 to transmit a common random access preamble to a plurality of cell change destination candidate groups. The TA measured by the base station device 200 may be transmitted to the terminal device 100 using a random access response (RAR), or may be transmitted to the terminal device 100 using a cell switching signal in step S1002. In this manner, performing uplink synchronization after the terminal device 100 executes step S1001 and before the cell switching signal is transmitted in step S1002 may be referred to as early TA measurement or early TA acquisition.

Note that cell switching may be paraphrased as LTM. Further, cell switching may be paraphrased as another term indicating cell switching by LTM. Hereinafter, cell switching and cell change may be treated as terms meaning the same thing.

### <Cell Switching Failure Processing>

In a case where the cell switching fails, the RRC connection re-establishment procedure may be performed similarly to certain handover failure processing or conditional handover failure processing.

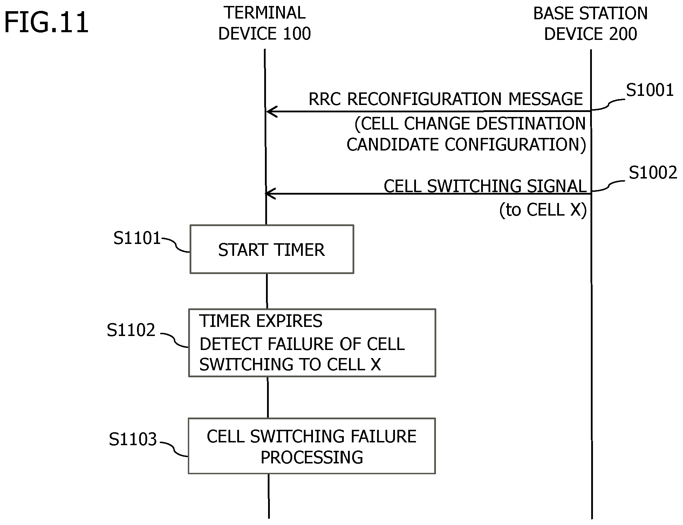

FIG. 11 is a figure illustrating an example of a sequence of cell switching failure detection and cell switching failure processing. Processing of step 1001 and step 1002 in FIG. 11 is similar to processing of step 1001 and step 1002 in FIG. 10.

When the cell switching signal is received (S1002), the terminal device 100 starts a timer for detecting a cell switching failure (S1101), and starts processing of cell switching to a cell (referred to as cell X) designated by the received cell switching signal (not illustrated).

In a case where the cell switching is successful before the timer expires, the terminal device 100 stops the timer (not illustrated). On the other hand, in a case where the timer expires, the terminal device 100 detects a failure of cell switching to cell X (S1102).

When the cell switching failure is detected (S1102), the terminal device 100 performs cell switching failure processing (S1103). In the cell switching failure processing, the terminal device 100 may revert to the configuration used in the source PCell and perform the RRC connection re-establishment procedure.

### <Key Stream Reuse Problem in Cell Switching Failure Processing>

In the LTM, in the RRC connection re-establishment procedure in the cell switching failure processing, it has been proposed that, in a case where the selected cell is one of the cell change destination candidates, the RRC connection is recovered in the same manner as in the case of conditional handover, that is, the cell switching to the selected cell is performed instead of transmitting the RRC re-establishment request message in the selected cell (for example, Non-Patent Literature 10 and Non-Patent Literature 11).

However, in a case where the selected cell is one of the cell change destination candidates in the RRC connection re-establishment procedure after the failure of the cell switching using the four-step CBRA, the failure of the cell switching using the two-step CFRA or CBRA, or the failure of the RACH-less cell switching, the processing of cell switching to the selected cell instead of transmitting the RRC re-establishment request message in the selected cell may cause a key stream reuse problem.

As described above, in the cell switching using four-step CBRA, the cell switching using two-step CFRA or CBRA, and the RACH-less cell switching, the uplink data may be transmitted together with the notification indicating that the cell has been switched before the cell switching succeeds. In a case where the notification indicating that the cell has been switched is an RRC message transmitted from an SRB (for example, SRB1) other than the SRBO, processing including security processing is performed in the PDCP entity of the SRB1, and the RRC message is transmitted as a PDCP data PDU through the lower layer. It is assumed that the COUNT value used for the security processing in the PDCP entity of the RRC message is, for example, n.

In addition, in a case where uplink data is transmitted from a certain DRB (referred to as DRB1) together with the notification indicating that the cell has been switched, processing including security processing is performed on the uplink data in the PDCP entity of DRB1, and the uplink data is transmitted as a PDCP data PDU through the lower layer. It is assumed that the COUNT value used for the security processing (in the PDCP entity of the uplink data) of the uplink data is, for example, m.

In a case where the cell switching fails, the terminal device 100 reverts the configuration to the configuration used in the source PCell and performs the RRC connection re-establishment procedure. When reverting to the configuration used in the source PCell, the value of the state variable in each entity of each radio bearer is also reverted to the value used in the source, and thus the COUNT value reverts to the state before the cell switching signal is received. In the RRC connection re-establishment procedure, in a case where the selected cell is one of the cell change destination candidates and cell switching is performed to the selected cell, the terminal device 100 transmits an RRC message which is a notification indicating that the cell is switched in the cell. When the RRC message is transmitted, n is used again as the COUNT value in the security processing in the PDCP entity of SRB1. In addition, when the first uplink message is transmitted from DRB1 in the cell, m is used again as the COUNT value in the security processing in the PDCP entity of DRB1. In cell switching in the LTM, the security key is not changed, and the same security key and the same COUNT value are used for the same direction (uplink) of the same radio bearer. That is, a key stream reuse problem may occur.

### <Cell Switching Failure Processing 1 for Avoiding Key Stream Reuse Problem>

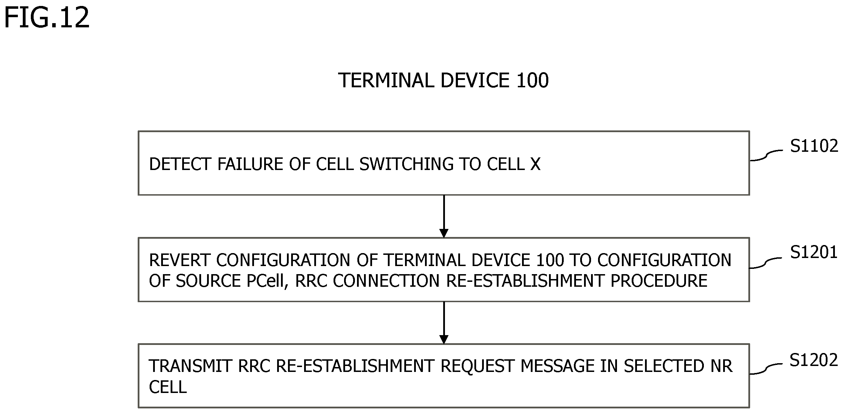

FIG. 12 is a figure illustrating an example of a first cell switching failure processing method. The first cell switching failure processing method is a method of, in a case where the cell selected by the terminal device 100 is the NR cell in the RRC connection re-establishment procedure in the cell switching failure processing, transmitting the RRC re-establishment request message to the base station device 200 in the selected NR cell regardless of whether or not the NR cell is one of the cell change destination candidates.

The terminal device 100 detects a failure of cell switching to cell X (S1102).

Next, the terminal device 100 reverts the configuration to the configuration used in the source PCell and performs the RRC connection re-establishment procedure (S1201). When reverting to the configuration used in the source PCell, the value of the state variable in each entity of each radio bearer is also reverted to the value (the value at the time of receiving the cell switching signal in step S1002 of FIG. 11 or the value immediately before the reception) used in the source. Note that the terminal device 100 may release the configurations of the stored cell change destination candidates when the RRC connection re-establishment procedure is performed. In a case where the configurations of the stored cell change destination candidates are released, the release processing may be performed before processing of step S1202 which will be described later.

In the RRC connection re-establishment procedure, the terminal device 100 performs cell selection and selects, for example, an NR cell. The terminal device 100 transmits the RRC re-establishment request message to the base station device 200 in the selected NR cell (S1202).

In the RRC connection re-establishment procedure, in a case where a selected cell is RAT other than NR, the terminal device 100 transitions to an RRC idle mode. In addition, in a case where a cell cannot be selected within a certain period of time, the terminal device 100 transitions to the RRC idle mode.

### <Cell Switching Failure Processing 2 for Avoiding Key Stream Reuse Problem>

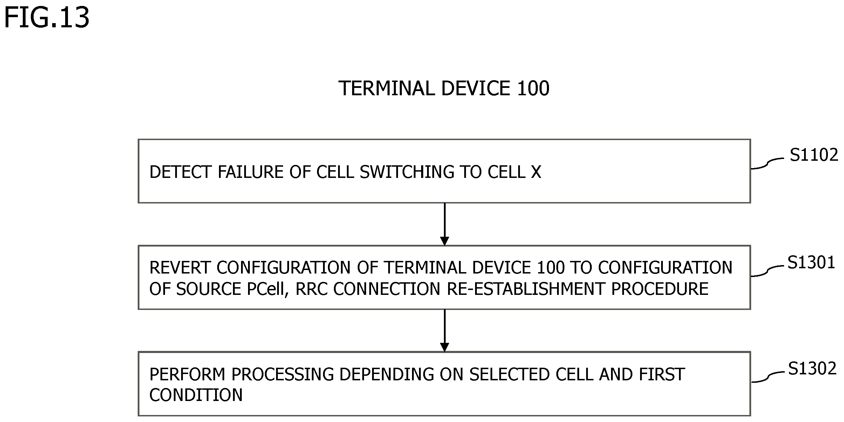

FIG. 13 is a figure illustrating an example of a second cell switching failure processing method. The second cell switching failure method is a method of, in a case where a cell selected by the terminal device 100 is one of cells satisfying a second condition and at least a first condition is satisfied in the RRC connection re-establishment procedure in cell switching failure processing, applying the configuration of the cell change destination candidate of the selected cell and performing the cell switching processing on the selected cell.

The second condition includes, for example, that the cell is a cell change destination candidate stored in the terminal device 100. In addition, the second condition includes, for example, that the cell is a cell in which recovery of RRC connection after cell switching failure is permitted.

The cell in which recovery of RRC connection after cell switching failure is permitted is, for example, a cell that is a cell change destination candidate stored in the terminal device 100 and belongs to the same group as the cell (for example, cell X) in which cell switching fails. The determination as to whether the cell belongs to the same group as cell X is performed using, for example, a group identifier set in advance in the configuration of the cell change destination candidate. The group identifier may be referred to as a reset unnecessary identifier.

In addition, the cell in which recovery of RRC connection after cell switching failure is permitted, for example, a cell that is a cell change destination candidate stored in the terminal device 100 and includes information indicating that recovery of RRC connection after cell switching failure is permitted in the configuration of the cell change destination candidate.

In a case where the cell selected by the terminal device 100 is one of cells satisfying the second condition and at least the first condition is satisfied, processing of applying the configuration of the cell change destination candidate of the selected cell and performing the cell switching processing on the selected cell may be performed, for example, in a case where at least the first parameter is configured in the terminal device 100.

The terminal device 100 detects a failure of cell switching to cell X (S1102).

Next, the terminal device 100 reverts the configuration to the configuration used in the source PCell and performs the RRC connection re-establishment procedure (S1301). In a case of reverting to the configuration used in the source PCell, the terminal device 100 reverts the values of state variables in each entity of each radio bearer to the values used in the source (values at the time of receiving the cell switching signal in step S1002 of FIG. 11 or values immediately before the reception).

In the RRC connection re-establishment procedure, the terminal device 100 performs cell selection and performs processing according to the selected cell and the first condition (S1302).

The first condition is that, for example, at the time of processing of cell switching to cell X after receiving the cell switching signal in step S1002 in FIG. 11, the cell switching processing by four-step CFRA has been performed, that is, the configuration of the cell change destination candidate for cell X includes the configuration of four-step CFRA.

In addition, the first condition may be that, for example, at the time of processing of cell switching to cell X after receiving the cell switching signal in step S1002 in FIG. 11, only the cell switching processing by four-step CFRA has been performed, that is, the configuration of the cell change destination candidate for cell X includes the configuration of four-step CFRA, and there is a reference signal whose RSRP is equal to or greater than the threshold in the first random access resource selection.

In addition, the first condition may be that, for example, at the time of processing of cell switching to cell X after receiving the cell switching signal in step S1002 in FIG. 11, the cell switching processing by four-step CFRA has been performed, that is, the configuration of the cell change destination candidate for cell X includes the configuration of four-step CFRA, and is the first cell selection after the cell switching failure detection in step S1102.

In addition, the first condition may be that, for example, at the time of processing of cell switching to cell X after receiving the cell switching signal in step S1002 in FIG. 11, only the cell switching processing by four-step CFRA has been performed, that is, the configuration of the cell change destination candidate for cell X includes the configuration of four-step CFRA, there is a reference signal whose RSRP is equal to or greater than the threshold in the first random access resource selection, and the selection is the first cell selection after the cell switching failure detection in step S1102.

Note that the fact that only the cell switching processing by four-step CFRA has been performed may be paraphrased as that the cell switching processing by four-step CFRA has been performed and the MAC PDU of a message 3 (Msg3) buffer has not been transmitted. In addition, the fact that only the cell switching processing by four-step CFRA has been performed may be paraphrased as words indicating that four-step or two-step CBRA has not been performed before cell switching processing by four-step CFRA.

Further, the first condition may be, for example, that the PDCP data PDU is not transmitted from the terminal device 100 through the lower layer, that is, that the RRC message is not transmitted from the SRB other than SRBO, and/or that the uplink data is not transmitted from the DRB, after the cell switching signal is received in step S1002 of FIG. 11 and before the cell switching failure is detected in step S1102.

Further, the first condition may be, for example, that the PDCP data PDU is not transmitted from the terminal device 100 through the lower layer, that is, the RRC message is not transmitted from the SRB other than SRB0 and/or the uplink data is not transmitted from the DRB after the cell switching signal is received in step S1002 of FIG. 11 and before the cell switching failure is detected in step S1102, and that the selection is the first cell selection after the cell switching failure is detected in step S1102.

Furthermore, the first condition may be, for example, that only the second signal has been transmitted from the terminal device 100 after the cell switching signal is received in step S1002 of FIG. 11 and before the cell switching failure is detected in step S1102.

Further, the first condition may be, for example, that only the second signal is transmitted from the terminal device 100 after the cell switching signal is received in step S1002 in FIG. 11 and before the cell switching failure is detected in step S1102, and the selection is the first cell selection after the cell switching failure is detected in step S1102.

The second signal is the notification transmitted in step S1004 in FIG. 10. The second signal may be, for example, a MAC CE. The second signal may be a signal of a physical layer.

Further, transmitting only the second signal from the terminal device 100 may mean that a MAC SDU is not transmitted from the terminal device 100.

In the RRC connection re-establishment procedure, the terminal device 100 performs cell selection. The terminal device 100 selects an NR cell, and in a case where the NR cell is one (for example, cell Y) of cells satisfying the second condition and the first condition is satisfied, applies the configuration of the cell change destination candidate for the cell Y, and performs processing of cell switching to the cell Y. Note that the processing of cell switching to the cell Y may be limited to a case where the first parameter is set in the terminal device 100. For example, in a case where the cell selected in the cell switching failure processing is one of the cells satisfying the second condition and the first condition is satisfied, the first parameter is a parameter indicating that the cell switching processing is performed on this cell.

In addition, in the RRC connection re-establishment procedure, when the selected cell is an NR cell and satisfies some or all of the following conditions A to C, the terminal device 100 transmits the RRC re-establishment request message to the base station device 200 in the selected cell. At this time, the terminal device 100 may release the configuration of the stored cell change destination candidate before transmitting the RRC re-establishment request message to the base station device 200.

Condition A: A selected cell is not one of cells satisfying the second condition.

Condition B: The first condition is not satisfied.

Condition C: The first parameter is not set.

In the RRC connection re-establishment procedure, in a case where the selected cell is a cell of RAT other than NR or in a case where the cell selection is not able to be performed within a predetermined time, the terminal device 100 transitions to the RRC idle mode.

Note that the terminal device 100 may be configured or designed (hereinafter, it may be referred to as transmission prohibition configuration) not to transmit the PDCP data PDU until a cell switching failure is detected in step S1102 after the cell switching signal is received in step S1002 of FIG. 11. The transmission prohibition configuration is, for example, setting or design to use only the CFRA of four steps for random access in the cell switching process. The configuration or design in which only four-step CFRA is used for random access in the cell switching processing means that the configuration of each cell change destination candidate includes the four-step CFRA configuration.

Further, the transmission prohibition configuration is, for example, that the MAC CE or physical layer signaling is used for the notification in step S1004 of FIG. 10, and the uplink data generated in the DRB or the like is not transmitted in step S1004. Not transmitting the uplink data generated in the DRB or the like means not transmitting the MAC SDU, for example.

In a case where the transmission prohibition configuration is set, the terminal device 100 performs processing in step S1302 as follows.

In the RRC connection re-establishment procedure, the terminal device 100 performs cell selection. In a case where the selected cell is a NR cell and is one (for example, cell Y) of the cells satisfying the second condition, the terminal device 100 applies the configuration of the cell change destination candidate for the cell Y and performs processing of cell switching to the cell Y. Note that the processing of cell switching to the cell Y may be performed only when the second parameter is set in the terminal device 100.

For example, in a case where the cell selected in the cell switching failure processing is one of the cells satisfying the second condition by the terminal device 100, the second parameter is a parameter indicating that the cell switching processing is performed on the cell.

Further, for example, in a case where the cell selected in the cell switching failure processing is one of the cells satisfying the second condition and is the first cell selection after the cell switching failure detection in step S1102, the second parameter may be a parameter indicating that the cell switching processing is performed on the cell.

In a case where the transmission restriction configuration is applied, in the RRC connection re-establishment procedure, in a case where the cell selected by the terminal device 100 is the NR cell and satisfies some or all of the following conditions D and E, the terminal device 100 transmits the RRC re-establishment request message to the base station device 200 in the selected cell. At this time, the terminal device 100 releases the configuration of the stored cell change destination candidate before transmitting the RRC re-establishment request message to the base station device 200.

Condition D: A selected cell is not one of cells satisfying the second condition.

Condition E: The first parameter is not set.

In the RRC connection re-establishment procedure, in a case where the selected cell is a cell of the RAT other than the NR or in a case where the cell selection is not able to be performed within a predetermined time, the terminal device 100 transitions to the RRC idle mode.

### <Cell Switching Failure Processing 3 for Avoiding Key Stream Reuse Problem>

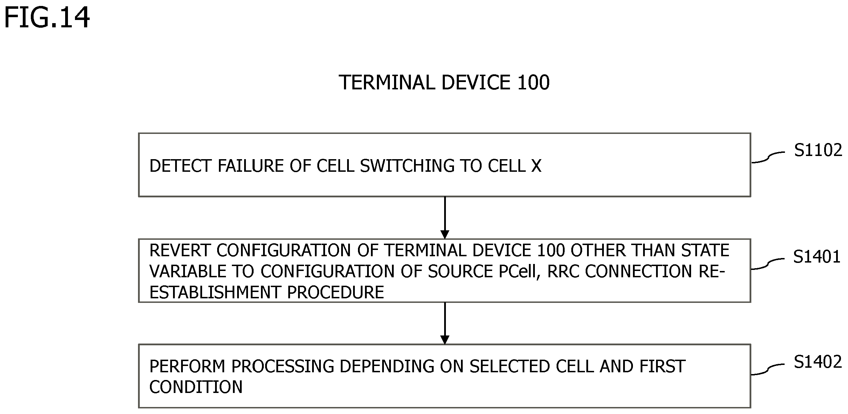

FIG. 14 is a figure illustrating an example of a third cell switching failure processing method. The third cell switching failure method is processing in which, when the terminal device 100 reverts the configuration to the configuration of the source PCell after detection of cell switching failure, the values of some or all of the state variables are held, and, in the RRC connection re-establishment procedure, in a case where the cell selected by the terminal device 100 is a NR cell and is one of the cells satisfying the second condition, the configuration of the cell change destination candidate of the selected cell is applied, and processing of cell switching to the selected cell is performed. Note that, when the terminal device 100 reverts the configuration to the configuration of the source PCell after detection of cell switching failure described above, processing of holding some or all of the values of the state variables is performed, for example, in a case where at least the second parameter is set in the terminal device 100. Further, in the RRC connection re-establishment procedure, in a case where the cell selected by the terminal device 100 is one of the cells satisfying the second condition, processing of applying the configuration of the cell change destination candidate of the selected cell and performing cell switching to the selected cell is performed, for example, in a case where at least the second parameter is set in the terminal device 100. In a case where the RRC re-establishment request message is transmitted to the base station device 200 in the selected cell, the terminal device 100 reverts the held state variables to the configuration of the source PCell before transmitting the RRC re-establishment request message.

The terminal device 100 detects a failure of cell switching to cell X (S1102).

Next, the terminal device 100 reverts the configuration to the configuration of the source PCell and performs the RRC connection re-establishment procedure (S1401). When reverting to the configuration used in the source PCell, the values of some or all of the state variables in each entity of each radio bearer are held without being reverted to the values (values at the time of receiving the cell switching signal in step S1002 of FIG. 11 or values immediately before the reception) used in the source PCell. The held state variables include, for example, the COUNT value in the PDCP entity. Furthermore, when reverting to the configuration used in the source PCell, processing of holding the values of some or all of the state variables in each entity of each radio bearer is performed, for example, in a case where the second parameter is set in the terminal device 100.

Next, in the RRC connection re-establishment procedure, the terminal device 100 performs cell selection and performs processing according to the selected cell and the first condition (step S1402).

In a case where the selected cell is a NR cell and is one (for example, cell Y) of the cells satisfying the second condition, the terminal device 100 applies the configuration of the cell change destination candidate for the cell Y and performs processing of cell switching to the cell Y. Note that the processing for the cell Y is performed, for example, in a case where the second parameter is set in the terminal device 100.

For example, in a case where the cell selected in the cell switching failure processing is one of the cells satisfying the second condition by the terminal device 100, the second parameter is a parameter indicating that the cell switching processing is performed on the cell.

Further, for example, in a case where the cell selected in the cell switching failure processing is one of the cells satisfying the second condition and is the first cell selection after the cell switching failure detection in step S1102, the second parameter may be a parameter indicating that the cell switching processing is performed on the cell.

Note that the values of some or all of the state variables in each entity of each radio bearer are, for example, the values of some or all of the state variables in each entity of each DRB.

In addition, in the RRC connection re-establishment procedure, in a case where the selected cell is a NR cell and satisfies some or all of the following conditions F and G, the terminal device 100 transmits the RRC re-establishment request message to the base station device 200 in the selected cell. At this time, the terminal device 100 releases the configuration of the stored cell change destination candidate before transmitting the RRC re-establishment request message to the base station device 200, for example. In addition, at this time, for example, the terminal device 100 may revert the values of the state variables held in step S1401 to the values used in the source PCell (values at the time of receiving the cell switching signal in step S1002 of FIG. 11 or values immediately before the reception) before transmitting the RRC re-establishment request message to the base station device 200. The processing of reverting the values of the state variables held in step S1401 to the values used in the source before transmitting the RRC re-establishment request message to the base station device 200 is performed, for example, in a case where the second parameter is set.

Condition F: A selected cell is not one of cells satisfying the second condition.

Condition G: The second parameter is not set.

In the RRC connection re-establishment procedure, in a case where the selected cell is a cell of the RAT other than the NR or in a case where the cell selection is not able to be performed within a predetermined time, the terminal device 100 transitions to the RRC idle mode.

### <Cell Switching Failure Processing 4 for Avoiding Key Stream Reuse Problem>

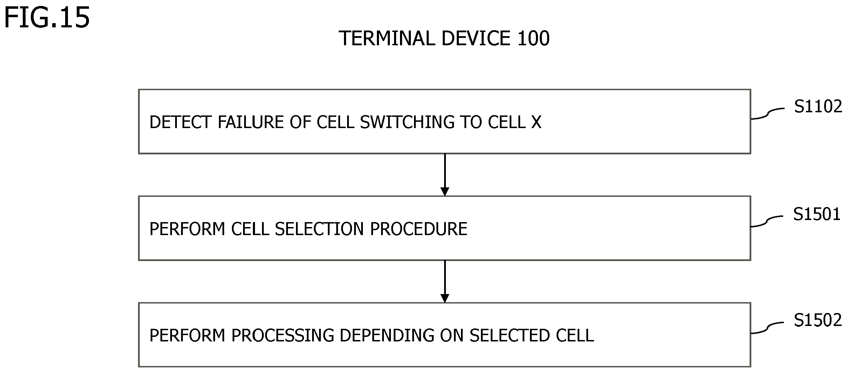

FIG. 15 is a figure illustrating an example of a fourth cell switching failure processing method.

The terminal device 100 detects a failure of cell switching to cell X (S1102).

Next, the terminal device 100 performs a cell selection procedure (S1501). The terminal device 100 may stop some or all of timers in operation before performing the cell selection procedure. The terminal device 100 may start a timer for limiting the time for performing the cell selection procedure to a certain period of time. The terminal device 100 may perform the cell selection procedure by using the configuration of the terminal device 100 at the time of a failure of cell switching without reverting the configuration to the configuration of the source PCell.

When performing the cell selection procedure, in the case of reverting the configuration to the configuration of the source PCell, the terminal device 100 holds some or all of the values of the state variables, the timers, and the like in each entity and some or all of the buffers in each entity.

In the case of not reverting the configuration to the configuration of the source PCell, the terminal device 100 performs the cell selection procedure by using the configuration of the terminal device 100 at the time of a failure of cell switching. In the case of reverting the configuration to the configuration of the source PCell, the terminal device 100 performs the cell selection procedure by holding some or all of the values of the state variables, the timers, and the like and some or all of the buffers in each entity. The processing of performing these cell selection procedures is performed, for example, in a case where any one or both of a case where a parameter indicating that LTM is performed is set in the terminal device 100 and a case where at least the second parameter is set in the terminal device 100 are satisfied.

In addition, the cell selection procedure may be performed as a part of the RRC connection re-establishment procedure, or may be performed separately from the RRC connection re-establishment procedure. Furthermore, in a case where at least the second parameter is not set, the terminal device 100 may perform processing of step S1604 and step S1605 without performing processing of step S1602 which will be described later.

Next, the terminal device 100 performs processing according to the selected cell (S1502).

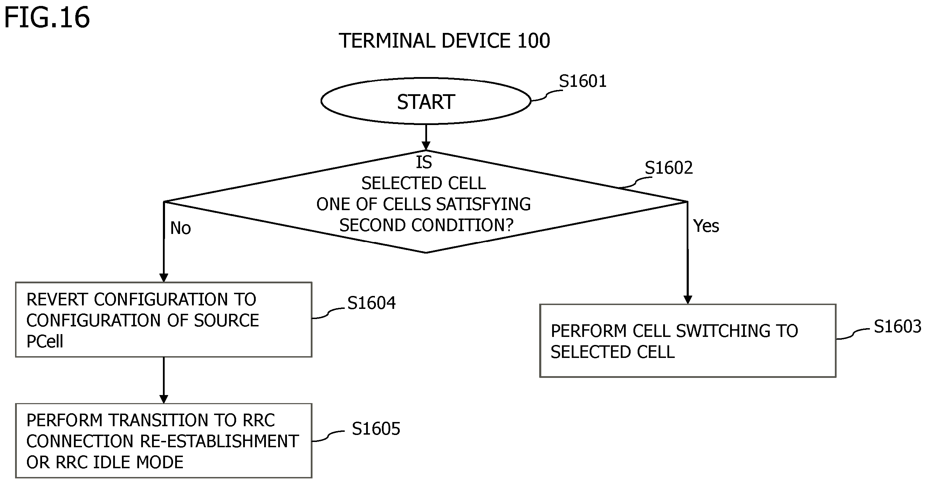

FIG. 16 is a figure illustrating an example of processing according to the selected cell in step S1502. The terminal device 100 starts the processing according to the selected cell (S1601).

The terminal device 100 determines whether the selected cell is one of cells satisfying the second condition (S1602).

In a case where the selected cell is one (for example, cell Y) of the cells satisfying the second condition (in the case of Yes), the terminal device 100 performs cell switching to the selected cell (cell Y) (S1603). Processing of performing cell switching to the selected cell in a case where the selected cell is one of the cells satisfying the second condition is performed, for example, in a case where a parameter indicating that LTM is performed is set in the terminal device 100 and in a case where at least the second parameter is set in the terminal device 100, or in a case where both thereof are satisfied.

For example, in a case where the cell selected in the cell switching failure processing is one of the cells satisfying the second condition, the second parameter is a parameter indicating that the cell switching processing is performed on the cell.

Further, the second parameter may be, for example, a parameter indicating that the cell switching processing is performed on the cell when the cell selected in the cell switching failure processing is one of the cells satisfying the second condition and is the first cell selection after the cell switching failure detection in step S1102.

When performing cell switching to the cell Y or before performing switching, the terminal device 100 may release a part of the held information. The part of the held information may include, for example, information obtained by early TA measurement or early TA acquisition. The information obtained by early TA measurement or early TA acquisition may include, for example, information including TA information and a value of a TA timer for the TA.

When or before performing cell switching to the cell Y, the terminal device 100 may generate a configuration of the cell Y used in the cell Y. That is, in a case where the reference configuration is stored, the terminal device 100 generates the configuration used in the cell Y by applying the configuration of the cell Y to be stored to the reference configuration. In a case where the reference configuration is not stored or in a case where the configuration of the cell change destination candidate to be stored is a complete configuration, the terminal device 100 may generate a configuration to be used in the cell Y by replacing the configuration to be used in the current cell with the configuration of the cell Y to be stored or by replacing the configuration to be used in the current cell with the configuration of the cell Y to be stored except for the fixed configuration. When generating the configuration used in the cell switching destination, the terminal device 100 may not revert some or all of the values of the state variable, the timer, and the like used in each entity (an SDAP entity, a PDCP entity, an RLC entity, a MAC entity, or the like.) to the initial state. That is, the terminal device 100 may hold some or all of the values such as the state variable and the timer used in each entity. In addition, when generating the configuration used in the cell switching destination, the terminal device 100 may not discard some or all of the buffers in each entity. That is, the terminal device 100 may hold some or all values of a state variable, a timer, and the like used by each entity. The terminal device 100 may hold some or all of the buffers in each entity.

Further, when performing cell switching to the cell Y, the terminal device 100 may perform cell switching using four-step or two-step CFRA, four-step or two-step CBRA, or RACH-less. The terminal device 100 may determine which cell switching method to use (whether to use four-step or two-step CFRA, four-step or two-step CBRA, or RACH-less for cell switching) according to the configuration of the cell Y. Further, when performing cell switching to the cell Y, the terminal device 100 may perform cell switching using RACH-less in a case where a third condition is satisfied. The third condition includes, for example, a case where the terminal device 100 has valid TA for the cell Y. The valid TA includes, for example, that the TA timer for the TA has not expired.

At the time of cell switching to the cell Y or after the cell switching, the terminal device 100 transmits a notification indicating that the cell has been switched (processing in step S1004 in FIG. 10). The notification indicating that the cell has been switched may include information indicating recovery of RRC connection after cell switching failure. Furthermore, information regarding an uplink resource for sending the notification indicating that the cell has been switched is included in, for example, RAR, dynamically assigned by the base station device 200 after cell switching, or included in the configuration of the cell Y.

In step S1602, the terminal device 100 determines whether the selected cell is one of the cells satisfying the second condition, and in a case where the selected cell is not one of the cells satisfying the second condition (in case of No), reverts the configuration to the configuration of the source PCell (step S1604). At this time, the terminal device 100 may also revert the values of the state variable, the timer, and the like used in each entity to the values specified in the source PCell.

Next, the terminal device 100 re-establishes RRC connection or transitions to the RRC idle mode (step S1605). For example, in a case where the selected cell is an NR cell, the terminal device 100 re-establishes the RRC connection. In a case where the selected cell is an NR cell, the terminal device 100 transmits the RRC re-establishment request message to the base station device 200 in the selected NR cell. At this time, the terminal device 100, for example, releases the configuration of the stored cell change destination candidate before transmitting the RRC re-establishment request message to the base station device 200. Furthermore, for example, in a case where the selected cell is a cell of RAT other than NR, or in a case where cell selection cannot be performed within a predetermined time, the terminal device 100 transitions to the RRC idle mode.

The processing of step S1605 is performed, for example, as a part of the RRC connection re-establishment procedure. In a case where cell selection processing in step S1501 is performed separately from the RRC connection re-establishment procedure, the terminal device 100 does not need to perform the cell selection procedure in the RRC connection re-establishment procedure. Furthermore, the terminal device 100 may reset the MAC and suspend some or all of the radio bearers before performing the processing in step S1605. The radio bearers to be suspended may not include at least SRB0. Furthermore, the terminal device 100 may release some or all of the held information before performing the processing of step S1605. Furthermore, the terminal device 100 may stop some or all of the timers in operation before performing the processing of step S1605.

As a result, the terminal device 100 and the base station device 200 can avoid the key stream reuse problem and perform secure communication in the cell switching failure processing of the terminal device 100.

In the cell switching failure processing, the fact that the selected cell is one of the cell change destination candidates stored in the terminal device 100 includes, for example, that the selected cell is one of PCells of the cell change destination candidates stored in the terminal device 100. The fact that the selected cell is one of the cell change destination candidates stored in the terminal device 100 includes, for example, that the selected cell is one of the PCells included in the configuration of the cell change destination candidate received in step S1001 of FIG. 11. That is, in the cell switching failure processing, even if the selected cell is one of the cells included in the cell change destination candidates stored in the terminal device 100, in a case where the selected cell is an SCell, the selected cell may not be regarded as one of the cell change destination candidates stored in the terminal device 100.

Similarly, in the cell switching failure processing, the fact that the selected cell is one of the cells satisfying the second condition includes, for example, that the selected cell is one of PCells satisfying the second condition.

Note that, in the present embodiment, processing after cell switching failure by the LTM has been described, but the present embodiment may be applied to other technologies. For example, the present embodiment may be applied to processing after a handover (reconfiguration with synchronization) failure in a non-terrestrial network (NTN).

In addition, although the present embodiment has described processing after cell switching failure by the LTM, the present embodiment may be applied to processing after a handover (reconfiguration with synchronization) failure. That is, the signal received by the terminal device 100 from the base station device in step S1002 may be the RRC reconfiguration message including reconfiguration-with-synchronization parameter. The target of the handover in this case may not be a cell change destination candidate stored in the terminal device 100. In this case, cell switching failure detection in step S1102 may be handover failure detection. The terminal device 100 may perform the cell switching failure processing disclosed in the present embodiment after handover failure detection. In a case where the terminal device 100 performs the cell switching failure processing disclosed in the present embodiment after handover failure detection, a part of the cell switching failure processing may be performed in a case where a parameter indicating master key update is not included in the RRC reconfiguration message including the reconfiguration-with-synchronization parameter. The part of the cell switching failure processing is, for example, processing of holding some or all of the values of the state variables when the configuration of the terminal device 100 is reverted to the configuration of the source PCell.

Although the four types of cell switching failure processing are disclosed in the present embodiment, the cell switching failure processing method to be applied may be selected depending on whether processing is processing after cell switching failure by the LTM or processing after handover (reconfiguration with synchronization) failure. For example, the cell switching failure 4 is applied in the case of processing after cell switching failure by the LTM, and the cell switching failure 1, the cell switching failure 2, or the cell failure process 3 is applied in the case of processing after handover (reconfiguration with synchronization) failure.

### <Handover Processing During LTM Configuration>

Even in a case where the LTM configuration is set in the terminal device 100, that is, even in a case where the terminal device 100 stores the configuration of at least one cell change destination candidate, there is a possibility that the base station device 200 transmits an instruction of handover (reconfiguration with synchronization), that is, the RRC reconfiguration message including the reconfiguration-with-synchronization parameter to the terminal device 100. However, the RRC reconfiguration message including the conventional reconfiguration-with-synchronization parameter does not include the group identifier of the target PCell. Therefore, there is a problem that the terminal device 100 cannot determine whether the Itm-ServingCellNoResetID held by the terminal device 100 or the variable indicating the group identifier of the current serving cell is changed by a handover. Therefore, handover processing during LTM configuration for avoiding this problem is needed.

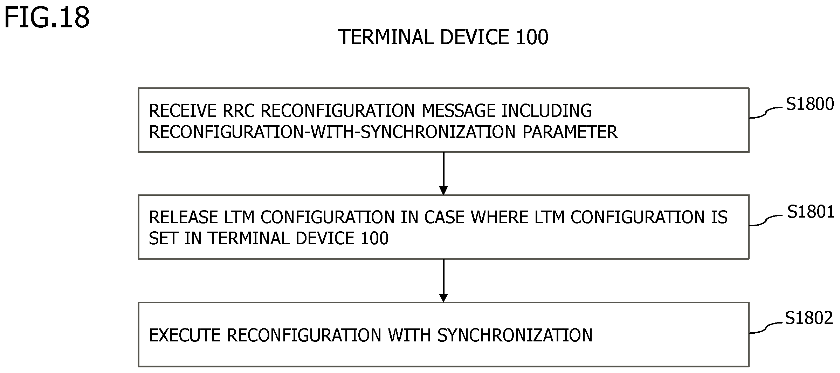

FIG. 18 is a figure illustrating a first example of handover processing during LTM configuration. The terminal device 100 receives the RRC reconfiguration message including the reconfiguration-with-synchronization parameter from the base station device 200 (S1800). Upon receiving the RRC reconfiguration message including the reconfiguration-with-synchronization parameter, the terminal device 100 checks whether the LTM configuration is set in the terminal device 100. In a case where the LTM configuration is set in the terminal device 100, the LTM configuration is released (S1801). Next, the terminal device 100 performs reconfiguration with synchronization (S1802). In the first example of handover processing during LTM configuration, the RRC reconfiguration message including the reconfiguration-with-synchronization parameter may include LTM configuration including the configuration of at least one cell change destination candidate. The LTM configuration in this case is a new setting of the LTM configuration. Note that the reconfiguration-with-synchronization parameter is an example of a fourth parameter.

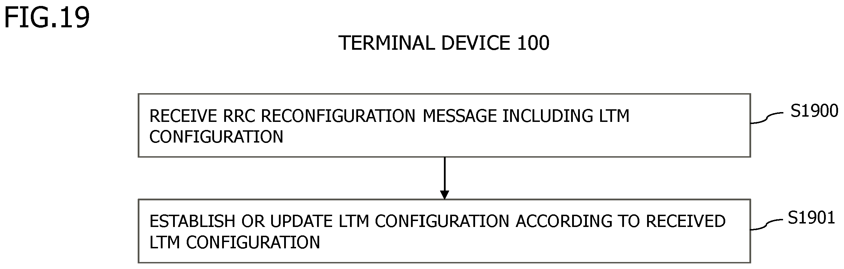

FIG. 19 is a figure illustrating a second example of handover processing during LTM configuration. The terminal device 100 receives the RRC reconfiguration message including the LTM configuration from the base station device 200 (S1900). Note that the RRC reconfiguration message including the LTM configuration may include the reconfiguration-with-synchronization parameter. Upon receiving the RRC reconfiguration message including the LTM configuration, the terminal device 100 newly sets or updates the LTM configuration according to the LTM configuration (step S1901). For example, in a case where Itm-ServingCellNoResetID is included in the received LTM configuration, the terminal device 100 holds the newly received value of Itm-ServingCellNoResetID as the latest value regardless of whether the value of Itm-ServingCellNoResetID has already been held. The terminal device 100 may store the newly received value of Itm-ServingCellNoResetID in a variable indicating the group identifier of the current serving cell to hold the value as the latest value. The definition of Itm-ServingCellNoResetID is, for example, a parameter that is needed in a case where the LTM configuration is newly set, and is optional in other cases. Further, in a case where the reconfiguration-with-synchronization parameter is included in the received RRC reconfiguration message including the LTM configuration, the terminal device 100 performs reconfiguration with synchronization.

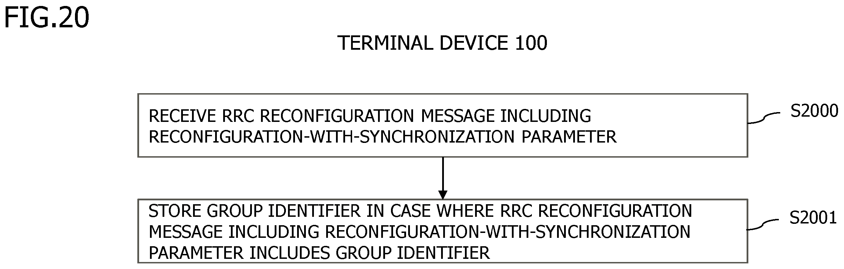

FIG. 20 is a figure illustrating a third example of handover processing during LTM configuration. The terminal device 100 receives the RRC reconfiguration message including the reconfiguration-with-synchronization parameter from the base station device 200 (S2000). Upon receiving the RRC reconfiguration message including the reconfiguration-with-synchronization parameter, the terminal device 100 checks whether a parameter meaning the group identifier is included in the received RRC reconfiguration message. In a case where the parameter indicating the group identifier is included in the received RRC reconfiguration message, a value of the parameter meaning the group identifier is stored as the latest value of Itm-ServingCellNoResetID. (S2001). The terminal device 100 may store the value of the parameter meaning the group identifier in a variable indicating the group identifier of the current serving cell to hold the value as the latest value.

As a result, even in a case where the terminal device 100 in which the LTM configuration is set receives a handover instruction, the latest group identifier can be held.

### <LTM processing across CUs>

In step S1001 of FIG. 10, it has been described that the configuration of the cell change destination candidate does not include the parameter indicating security key update, that is, the security key by the LTM is not updated. This is because LTM across CUs is not assumed in the current discussion in 3GPP. However, in a case where LTM across centralized units (CUs) is considered, it is needed to update the security key.

In CHO, in a case where a target PCell belongs to a different CU, a parameter indicating security key update, that is, master key update (masterKeyUpdate) has to be included in a configuration parameter of a PCell change destination candidate. Therefore, even in the case of CHO across CUs, the security key is updated. In addition, in CHO, the terminal device 100 releases the configuration of CHO after executing CHO, and the base station device 200 newly performs the configuration of CHO on the terminal device 100. Therefore, even in a case where CHO across CUs is performed again after CHO across the CUs is performed, the security key can be updated. However, in the case of the LTM, in order to support subsequent cell switching, whether to cross CUs differs depending on which cell among the cell switching destination candidates is viewed from. Therefore, a method of causing the terminal device 100 to update the security key needs to be devised.

In a first example of LTM processing across CUs, when the base station device 200 performs LTM configuration on the terminal device 100, in a case where at least one cell change destination candidate belonging to a cell having a different CU is included in the cell change destination candidates, master key update is included in the configurations of all cell change destination candidates. As a result, even in a case where LTM across CUs is performed again in subsequent cell switching, the terminal device 100 can update the security key.

In a second example of LTM processing across CUs, when the base station device 200 performs the LTM configuration on the terminal device 100, master key update is not included in the cell change destination candidates, and a parameter instructing security update is included in a cell switching signal. That is, when instructing the terminal device 100 to perform the LTM across CUs, the base station device 200 includes the parameter instructing security update in the cell switching signal. In a case where the base station device 200 instructs LTM that does not cross CUs for the terminal device 100, the parameter instructing security update may or may not be included in the cell switching signal. The parameter instructing security update may include a parameter indicating whether security update is needed and/or a parameter indicating a security key update method. In a case where the parameter instructing security update includes the parameter indicating whether security update is needed and the parameter indicating the security key update method, when the parameter indicating whether security update of the received cell switching signal is needed indicates that security update is needed or includes the parameter indicating the security key update method, the terminal device 100 updates the security key according to the parameter indicating the security key update method. In a case where the parameter indicating whether security update of the received cell switching signal is needed indicates that security update is not needed or does not include the parameter indicating the security key update method, terminal device 100 does not update the security key.

The parameter instructing security update or the parameter indicating the security key update method included in the cell switching signal may include some or all of master key update parameters included in the RRC reconfiguration message. The fact that the parameter instructing security update or the parameter indicating the security key update method included in the cell switching signal includes some information of the master key update parameters means that only information of a Nexthop Chaining Count (NCC) which is a parameter indicating whether a new security key generation method is horizontal generation or vertical generation is included, for example. In this case, it is assumed that LTM across AMF is not performed. In addition, the fact that the parameter instructing security update or the parameter indicating the security key update method included in the cell switching signal includes some information of the master key update parameters means that, for example, by determining in advance that a new security key generation method is only horizontal generation or only vertical generation, a new security key may be generated by not including the parameter indicating the security key update method such as NCC but including only the parameter indicating whether the security update is needed. In addition, the fact that the parameter instructing security update or the parameter indicating the security key update method included in the cell switching signal includes some information of the master key update parameters is that, for example, by setting '0' to no security update, setting '1' to horizontal generation, setting '2' to vertical generation, and the like, a new security key may be generated with less information than information including NCC. In a case where the parameter instructing security update or the parameter indicating the security key update method included in the cell switching signal includes some information of the master key update parameters, the base station device 200 updates security information by the RRC reconfiguration message as appropriate such that the terminal device 100 can update the security key without any problem. As a result, even in a case where LTM across CUs is performed again in subsequent cell switching, the terminal device 100 can update the security key.

In a third example of LTM processing across CUs, the terminal device 100 deletes the LTM configuration in a case where security update is performed by the LTM, that is, in a case where master key update is included in the target Itm-CandidateConfig. Then, the base station device 200 newly performs LTM configuration on the terminal device 100, thereby enabling the terminal device 100 to perform LTM across CUs again.

In a fourth example of LTM processing across CUs, after instructing LTM across CUs for the terminal device 100, the base station device 200 updates the LTM configuration of the terminal device 100 before instructing the next LTM, and thus the base station device 200 can cause the terminal device 100 to update the security key even in a case where the LTM across CUs is performed again in the subsequent cell switching.

### <Others>

Some of the messages in the sequence described above may not be performed in order or the order may be partially changed. In addition, some of the messages in the sequence may not be performed.

Furthermore, what is described as the function and processing of the terminal device 100 may be the function and processing of the base station device 200. Furthermore, what is described as the function and processing of the base station device 200 may be the function and processing of the terminal device 100.

In a case where the "radio bearer" is simply used without distinguishing between the signaling radio bearer and the data radio bearer, the radio bearer may be a signaling radio bearer, may be a data radio bearer, or may be both a signaling radio bearer and a data radio bearer.

In addition, "A may be paraphrased as B" and "A may be paraphrased as B" include a meaning of paraphrasing B as A in addition to paraphrasing A as B.

In a case where the condition of "A" and the condition of "B" are opposite to each other, the condition of "B" may be expressed as the condition of "others" of the condition of "A".

In summary, the following is obtained.
(1) A terminal device including: a reception unit configured to receive an RRC message and a first signal from a base station device; and a processing unit configured to be able to perform configuration according to a first parameter in a case where the RRC message includes the first parameter, wherein the first parameter includes a second parameter, the first parameter further includes a configuration of a first LTM candidate and a third parameter related to the first LTM candidate, cell switching to the first LTM candidate is performed in a case where the first signal is received from the base station device, first processing is not performed in a case where a value of the third parameter is the same as a value of the second parameter, and the first processing is performed in a case where the value of the third parameter is different from the value of the second parameter to replace the value of the second parameter with the value of the third parameter.
(2) The terminal device according to (1), wherein the processing unit releases an LTM configuration set in the terminal device in a case where the RRC message including a fourth parameter is received from the base station device.
(3) The terminal device according to (1) or (2), wherein the second parameter is a parameter that is needed in a case where the first parameter is initially set and is optional in other cases.
(4) The terminal device according to (1), (2), or (3), wherein the first signal is an LTM cell switching signal, the first parameter is an LTM configuration, the second parameter is a current cell reset unnecessary number, the third parameter is a reset unnecessary number, and the first processing is Layer 2 reset.
(5) The terminal device according to (2), (3), or (4), wherein the fourth parameter is reconfiguration with synchronization.

Note that, although an example of the device has been described in each embodiment, the method of the present disclosure is not limited to a cellular phone, a smartphone, a tablet terminal, a base station device, and the like, and can be applied to other electronic devices, for example, electronic devices mounted on automobiles, trains, airplanes, artificial satellites, and the like, electronic devices mounted on drones and the like, robots, AV devices, home appliances, office devices, vending machines, other home appliances, industrial devices, and the like.

In each embodiment, E-UTRA and NR have been described as radio access technologies, and EPC and 5GC have been described as core networks; however, the method of the present disclosure is not limited thereto. For example, the form of the present disclosure may be applied to radio access technologies or networks of different generations such as 6th generation or 7th generation.

The present invention is not limited to the above embodiment, and various modifications can be made.

In addition, each embodiment has been described in detail with reference to the drawings, but the specific configuration is not limited to the disclosed drawings and the described embodiments.

### REFERENCE SIGNS LIST

- 10:: COMMUNICATION SYSTEM
- 100: :TERMINAL DEVICE
- 110: :CPU
- 120: : STORAGE
- 121: :WIRELESS COMMUNICATION PROGRAM
- 122: :TERMINAL-SIDE PROGRAM
- 130: :MEMORY
- 140: :WIRELESS COMMUNICATION CIRCUIT
- 200: :BASE STATION DEVICE
- 210: :CPU
- 220: :STORAGE
- 221: :WIRELESS COMMUNICATION PROGRAM
- 222: :BASE STATION-SIDE PROGRAM
- 230: :MEMORY
- 240: :WIRELESS COMMUNICATION CIRCUIT
- 250: :NETWORK INTERFACE
- 300: :CORE NETWORK

## Claims

1. A terminal device comprising:
a receaver configured to receive an RRC message and a first signal from a base station device; and
a processor configured to be able to perform configuration according to a first parameter in a case where the RRC message includes the first parameter,
wherein the first parameter includes a second parameter,
the first parameter further includes a configuration of a first LTM candidate and a third parameter related to the first LTM candidate, and
the processor performs cell switching to the first LTM candidate in a case where the first signal is received from the base station device, does not perform first processing in a case where a value of the third parameter is the same as a value of the second parameter, and performs the first processing in a case where the value of the third parameter is different from the value of the second parameter to replace the value of the second parameter with the value of the third parameter.

2. The terminal device according to claim 1, wherein the processor releases an LTM configuration set in the terminal device in a case where the RRC message including a fourth parameter is received from the base station device.

3. The terminal device according to claim 1 or 2, wherein the second parameter is a parameter that is needed in a case where the first parameter is initially set and is optional in other cases.

4. The terminal device according to claim 1, wherein the first signal is an LTM cell switching signal, the first parameter is an LTM configuration, the second parameter is a current cell reset unnecessary number, the third parameter is a reset unnecessary number, and the first processing is Layer 2 reset.

5. The terminal device according to claim 2, wherein the fourth parameter is reconfiguration with synchronization.

6. A base station device comprising:
a transmitter configured to transmit an RRC message and a first signal to a terminal device; and
a processor configured to include a first parameter in the RRC message and to be able to perform control to cause the terminal device to perform configuration according to the first parameter,
wherein the first parameter includes a second parameter,
the first parameter further includes a configuration of a first LTM candidate and a third parameter related to the first LTM candidate, and
the processor performs control such that the first signal is transmitted from the transmitter to the terminal device, causes the terminal device to perform cell switching to the first LTM candidate, causes first processing not to be performed in a case where a value of the third parameter is the same as a value of the second parameter, and causes the first processing to be performed in a case where the value of the third parameter is different from the value of the second parameter to replace the value of the second parameter with the value of the third parameter.

7. The base station device according to claim 6, wherein the processor performs control such that the RRC message including a fourth parameter is transmitted from the transmitter, and causes an LTM configuration set in the terminal device to be released.

8. The base station device according to claim 6 or 7, wherein the second parameter is a parameter that is needed in a case where the first parameter is initially set, and is optional in other cases.

9. A wireless communication system comprising:
a base station device configured to transmit an RRC message and a first signal; and
a terminal device configured to receive the RRC message and the first signal and to perform configuration according to a first parameter in a case where the RRC message includes the first parameter,
wherein the first parameter includes a second parameter,
the first parameter further includes a configuration of a first LTM candidate and a third parameter related to the first LTM candidate, and
the terminal device performs cell switching to the first LTM candidate in a case where the first signal is received from the base station device, does not perform first processing in a case where a value of the third parameter is the same as a value of the second parameter, and performs the first processing in a case where the value of the third parameter is different from the value of the second parameter to replace the value of the second parameter with the value of the third parameter.
